# EUROPEAN PATENT APPLICATION

(11) **EP 3 981 816 A1**
(43) Date of publication of application: **13.04.2022**
(21) Application number: 21200853.6
(22) Date of filing: 05.10.2021
(51) Int. Cl.: C08G 18/48, C08G 18/76, C08L 75/08

(54) **SHAPED FLEXIBLE PU FOAM ARTICLES**

(30) Priority: 07.10.2020 EP 20200489
(71) Applicant: Evonik Operations GmbH, 45128 Essen (DE)
(72) Inventor: Hermann, Daniela, 40477 Düsseldorf (DE); Terheiden, Annegret, 46519 Alpen (DE); Landers, Rüdiger, 45257 Essen (DE); Ziegler, Rainer, 44623 Herne (DE); Schuch, Dominik, 40221 Düsseldorf (DE)
(74) Representative: Evonik Patent Association

(57) **Abstract**

What are described are shaped flexible PU foam articles, preferably mattresses and/or cushions, wherein the flexible polyurethane foam has been obtained by reaction of at least one polyol component and at least one isocyanate component in the presence of at least one blowing agent and one or more catalysts that catalyse the isocyanate-polyol and/or isocyanate-water reactions and/or isocyanate trimerization and further additives,
characterized in that the additives comprise organic esters.

## Description

The present invention is in the field of polyurethane (PU) foams. It especially relates to the provision of shaped flexible PU foam articles, for example mattresses and/or cushions.

Shaped flexible PU foam articles, for example flexible PU foam-containing mattresses and/or cushions, have long been known from the prior art and are employed worldwide. There has been no shortage of attempts to achieve ever greater improvements. The need for optimization has not been fully satisfied to the present day.

One problem with regard to shaped flexible PU foam articles is the transport and storage thereof. Shaped flexible PU foam articles, for example mattresses, are very bulky and are therefore often compressed, especially compressed and vacuum-packed, for storage and transport due to space considerations. Large distributors are increasingly shipping certain mattresses in compressed and rolled-up form.

Such packagings are widely used for mattresses in particular. In vacuum packaging the mattress is placed in a bag made of plastic film for example. The thus prepackaged mattress is then placed in a press and compressed with one end of the bag open. The air escapes. The open end of the bag is then welded shut in an airtight manner. The thus obtained vacuum packaging is then rolled up and placed inside an outer bag. The mattress cannot re-expand since the outer bag keeps it in rolled-up form.

Flattening a mattress to the extent achieved by a machine during rolling for example requires a force between 40 000 and 250 000 N depending on the mattress. This corresponds to the weight exerted by a mass of 4 to 25 tons.

As is immediately apparent, such a force in connection with the compression of shaped flexible PU foam articles may result in material fatigue. It is a very relevant problem to provide shaped flexible PU foam articles which even after extended compression are capable of recovering their original dimensions.

Against this backdrop the present invention specifically has for its object to provide shaped flexible PU foam articles such as in particular flexible PU foam-containing mattresses and/or cushions that have good capability of recovering their original shape after compression over a period of at least 20 hours, in particular of at least 48 hours.

In the context of the present invention it has now been found that, surprisingly, this object can be achieved by the subject matter of the invention.

This invention provides a shaped flexible PU foam article, preferably mattress and/or cushion, wherein the flexible PU foam has been obtained by reaction of at least one polyol component and at least one isocyanate component in the presence of at least one blowing agent and one or more catalysts that catalyse the isocyanate-polyol and/or isocyanate-water reactions and/or isocyanate trimerization and further additives, wherein the additives comprise organic esters. Preferred organic esters are listed below in the description.

The use of at least one organic ester in the production of flexible PU foam enables improved dimension recovery of the shaped PU foam article after compression, especially after compression and vacuuming.

Optionally, it is advantageously possible also to additionally use further customary additives, active substances and auxiliaries. Mattresses are very particularly preferred in the context of the present invention. This advantageously also applies to all of the preferred embodiments of our invention.

Advantageously, the shaped flexible PU foam article thus provided using the inventive organic ester(s) therefore has good capability of recovering its original shape even after extended compression over a period of at least 20 hours, in particular of at least 48 hours, especially after compression and vacuuming.

A further advantage is that the shaped flexible PU foam articles in question are particularly low in emissions with regard to volatile organic compounds. What is meant more particularly in the context of the present invention by "low in emissions" is that the flexible PU foam that results in accordance with the invention preferably has an emission of ≥ 0 µg/m³ to ≤ 500 µg/m³, more preferably ≤ 200 µg/m³, even more preferably ≤ 100 µg/m³, appropriately determined by the test chamber method based on DIN standard DIN EN ISO 16000-9:2008-04, 24 hours after test chamber loading. This method is described precisely in EP 3205680A1, specifically in paragraph [0070], which is hereby incorporated by reference.

A further advantage is that the shaped flexible PU foam articles in question can also meet emissions specifications such as CertiPur and/or VDA 278. What is meant here by low in emissions according to CertiPur is that total emissions of volatile organic substances (TVOCs) are preferably less than 500 µg/m³, determined according to the method ISO 16000-9 and ISO 16000-11. Further technical details of the requirements for the CertiPUR standard (Version 1. July 2017) can be found at: https://www.europur.org/images/CertiPUR_Technical_Paper_-_Full_Version_-_2017.pdf. This latter document (Version 1. July 2017) can also be ordered directly at EUROPUR, Avenue de Cortenbergh 71, B-1000 Brussels, Belgium. "Low-emission" according to VDA 278 is to be understood as meaning that the PU foams meet the specifications of the method Daimler Chrysler PB VWL 709. The VDA 278 method and specification are also described in the examples.

PU foams (polyurethane foams) and the production thereof are well known to those skilled in the art and, per se, require no further elucidation.

Polyurethane (PU) in the context of the present invention is especially understood to mean a product obtainable by reaction of polyisocyanates and polyols, or compounds having isocyanate-reactive groups. Further functional groups in addition to the polyurethane can also be formed in the reaction, examples being uretdiones, carbodiimides, isocyanurates, allophanates, biurets, ureas and/or uretonimines. Therefore, PU is understood in the context of the present invention to mean both polyurethane and polyisocyanurate, polyureas, and polyisocyanate reaction products containing uretdione, carbodiimide, allophanate, biuret and uretonimine groups. In the context of the present invention, polyurethane foam (PU foam) is understood to mean foam which is obtained as reaction product based on polyisocyanates and polyols or compounds having isocyanate-reactive groups. The reaction to give what is named a polyurethane can form further functional groups as well, examples being allophanates, biurets, ureas, carbodiimides, uretdiones, isocyanurates or uretonimines. Therefore, PU foams are understood in the context of the present invention to mean both PU foams (PUR foams) and polyisocyanurate foams (PIR foams). PU foams in the sense of our invention are flexible PU foams. Particular preference is given in this context to standard flexible PU foams, highly resilient cold-cure polyurethane foams (also referred to hereinafter as "high-resilience", i.e. HR PU foams), viscoelastic PU foams and hypersoft PU foams, and also PU foams which have properties between these classifications and are used in the automobile industry. More particularly, all the aforementioned PU foam types are covered by the invention.

It will be apparent that a person skilled in the art seeking to produce the different flexible PU foam types, for example viscoelastic PU foams or hypersoft PU foams, will appropriately select the substances necessary for the purpose in each case, e.g. isocyanates, polyols, stabilizers, surfactants, etc., in order to obtain the desired PU foam type. Further details of the usable starting materials, catalysts and auxiliaries and additives can also be found, for example, in Kunststoffhandbuch [Plastics Handbook], volume 7, Polyurethane [Polyurethanes], Carl-Hanser-Verlag Munich, 1st edition 1966, 2nd edition 1983 and 3rd edition 1993. The compounds, components and additives below are usable with preference.

Shaped articles in the context of the invention are shaped bodies of different shape. Preferred shapes in the context of the invention are, for example, geometries such as spheres, cuboids, cylinders etc. Shaped PU foam articles in the context of the invention are thus shaped bodies made of polyurethane foam. Particularly preferred shaped flexible PU foam articles in the context of the present invention are mattresses and/or cushions and also foam blocks in general.

Mattresses per se and the production thereof are known. They usually consist of a mattress core, e.g. comprising foam, latex, natural products and/or a spring core, and a cover surrounding the mattress. A corresponding situation applies to cushions. In the context of the present application, the term mattress and/or cushion is understood to mean that at least one section made of flexible PU foam is present in the mattress and/or the cushion. This preferably means that at least part of the mattress and/or cushion consists of flexible PU foam. Based on the total weight of the mattress and/or of the cushion, this part can account for at least 1% by weight or at least 5% by weight or at least 25% by weight, preferably at least 50% by weight, in particular at least 75% by weight. It is also possible for the mattress and/or the cushion to consist entirely of flexible PU foam, apart from the cover.

The production of polyurethane foam in general is known per se. It is essential to the present invention that the foam is a flexible PU foam and its manufacturing is carried out in the presence of at least one organic ester.

The polyurethane foam according to the invention is a flexible polyurethane foam, or a combination of different flexible PU foams is used, for example two of these flexible PU foams. The term "flexible PU foam" is known per se to the person skilled in the art; this is a fixed technical term which is correspondingly established in the specialist field.

Flexible PU foams are elastic and deformable and usually have open cells. As a result, the air can escape easily on compression. In addition, there are also rigid PU foams that are inelastic and usually have closed cells, are used for insulation purposes and are not in the focus of the present invention.

There exists a wide variety of flexible PU foams. For instance, the person skilled in the art is aware inter alia of ester foams (made from polyester polyols), flexible hot-cure PU foams and cold-cure PU foams. Viscoelastic flexible PU foams are a relatively new type which may be counted among the hot-cure flexible PU foams.

In a preferred embodiment, the shaped flexible PU foam article is characterized in that the flexible PU foam is a standard flexible PU foam, viscoelastic PU foam, an HR PU foam or a hypersoft PU foam.

Preferably, the standard flexible PU foam is a hot-cure flexible PU foam. Preferably, the HR PU foam is a HR cold-cure PU foam. Standard flexible PU foam and hot-cure flexible PU foam are very particularly preferred in the context of the present invention. This advantageously also applies to all of the preferred embodiments of our invention.

The crucial difference between a hot-cure flexible PU foam and a cold-cure PU foam lies in the different mechanical properties. It is possible to differentiate between flexible hot-cure PU foams and flexible cold-cure PU foams via rebound resilience in particular, also called ball rebound (BR) or resilience. A method of determining the rebound resilience is described, for example, in DIN EN ISO 8307:2008-03. Here, a steel ball having a fixed mass is allowed to fall from a particular height onto the test specimen and the height of the rebound in % of the drop height is then measured. The values in question for a cold-cure flexible PU foam are preferably in the region of > 50%. Cold-cure flexible PU foams are therefore also often referred to as HR foams (HR: High Resilience). By contrast, hot-cure flexible PU foams have rebound values of preferably 1% to not more than 50%. In the context of a preferred embodiment of the invention, the hot-cure flexible PU foams according to the invention therefore have rebound values of preferably 1% to not more than 50%, determinable in accordance with DIN EN ISO 8307:2008-03. A further mechanical criterion is the sag or comfort factor. In this case, a foam sample is compressed in accordance with DIN EN ISO 2439 and the ratio of compressive stress at 65% and 25% compression is measured. Cold-cure flexible PU foams here have a sag or comfort factor of preferably > 2.5. Hot-cure flexible PU foams have a value of preferably < 2.5. In a preferred embodiment of the invention, the hot-cure flexible PU foams of the invention therefore have a sag or comfort factor of preferably < 2.5, determinable as specified above.

An exact definition of the properties can also be taken, for example, from the data sheet "PUR-Kaltschaum" [Cold-Cure PU Foam] from the Fachverband Schaumkunststoffe und Polyurethane e.V. [Specialist Association Foamed Plastics and Polyurethanes], Reference KAL20160323, last update 23.03.2016. (https://www.fsk-vsv.de/wp-content/uploads/2017/03/Produktbeschreibunq-PUR-Kaltschaum.pdf). This data sheet can also be ordered directly from the Fachverband Schaumkunststoffe und Polyurethane e.V. (FSK), postal address: Stammheimerstr. 35, D-70435 Stuttgart.

The two names hot-cure flexible PU foam and cold-cure flexible PU foam are explained by the historical development of PU technology, and do not necessarily mean that different temperatures occur in the foaming process.

The different mechanical properties of hot-cure PU foams and cold-cure PU foams result from differences in the formulation for production of the foams. In the case of a cold-cure flexible PU foam, predominantly high-reactivity polyols having primary OH groups and average molar mass > 4000 g/mol are usually used. Optionally, low molecular weight crosslinkers are also used, and it is also possible for the function of the crosslinker to be assumed by higher-functionality isocyanates. In the case of hot-cure flexible PU foams, comparatively predominantly unreactive polyols having secondary OH groups and an average molar mass of < 4000 g/mol are usually used. In the case of cold-cure flexible PU foams, reaction of the isocyanate groups with the hydroxyl groups thus occurs as early as in the expansion phase (CO₂ formation from -NCO and H₂O) of the foam. This rapid polyurethane reaction usually leads, as a result of a viscosity increase, to a relatively high intrinsic stability of the foam during the blowing process.
Cold-cure flexible PU foams are usually highly elastic foams. Due to the high intrinsic stability, the cells have generally not been opened sufficiently at the end of the foaming operation and the cell structure additionally has to be open by mechanical crushing. In the case of hot-cure flexible PU foams, by contrast, this is not normally necessary.
Open-cell hot-cure flexible PU foams preferably have a gas permeability (also called "porosity") within a range from 1 to 6.5 scfm. This is measured by applying a pressure differential and measuring the volume of air that flows through in accordance with ASTM D 3574 (2011-00). The method is elucidated in detail in the Examples (see Porosity determined by the flow method therein). Scfm (standard cubic feet per minute) is measured under standard conditions (23°C, 100 kPa).

Depending on the application, hot-cure flexible PU foams preferably have a foam density between 8 and 80 kg/m³. Especially when such hot-cure flexible PU foams are used as mattresses, mattress constituents and/or cushions, said foams are differentiated according to regional wants and needs, requirements and preferences of consumers. The preferred hot-cure flexible PU foam for mattress applications has a foam density of preferably 25-30 kg/m³.

A specific class of hot-cure flexible PU foams is that of viscoelastic PU foams. These are also known as "memory foam" and exhibit both a low rebound resilience (preferably < 10%) and a slow, gradual recovery after compression (recovery time preferably 2-10 s). Materials of this kind are well known in the prior art and are highly valued for, in particular, their energy- and sound-absorbing properties too. Typical viscoelastic flexible foams usually have a lower porosity and a high density (or a high foam density (FD)) compared to other hot-cure flexible PU foams. Cushions have a foam density of preferably 30-50 kg/m³ and are thus at the lower end of the density scale typical of viscoelastic foams, whereas viscoelastic PU foams for mattresses preferably have a density in the range of 50-130 kg/m³.

In hot-cure flexible PU foams, the hard and soft (low glass transition temperature) segments become oriented relative to one another during the reaction and then spontaneously separate from one another to form morphologically different phases within the "bulk polymer". Such materials are also referred to as "phase-separated" materials. The glass transition temperature in the case of viscoelastic foams is preferably between -20 and +15°C. The glass transition temperature of other hot-cure flexible PU foams and cold-cure flexible PU foams, by contrast, is usually below -35°C. Such "structural viscoelasticity" in the case of open-cell viscoelastic hot-cure flexible PU foams which is based essentially on the glass transition temperature of the polymer should be distinguished from a pneumatic effect. In the latter case, the cell structure is relatively closed (low porosity). As a result of the low air permeability, the air flows back in only gradually after compression, which results in slowed recovery.

Various hot-cure flexible PU foams are classified not only according to foam density but often also according to their compressive strength, also referred to as load-bearing capacity, for particular applications. For instance, compressive strength CLD (compression load deflection), 40% in accordance with DIN EN ISO 3386-1:2015-10, for hot-cure flexible PU foams is preferably in the range of 0.5-8.0 kPa; viscoelastic polyurethane foams preferably have values of 0.1-5.0 kPa, especially 0.5-2.5 kPa. Hypersoft polyurethane foams may be counted among the group of hot-cure flexible PU foam and preferably have values of 0.1-3.0 kPa, especially 0.5-2.0 kPa.

In a preferred embodiment of the invention, the flexible PU foams to be used in accordance with the invention have the following preferred properties in respect of rebound resilience, foam density and/or porosity (optionally after crushing the foams, particularly in the case of cold-cured flexible polyurethane foam), namely a rebound resilience of 1% to 80%, measured in accordance with DIN EN ISO 8307:2008-03, and/or a foam density of 5 to 150 kg/m³ and/or a porosity of 0.5 to 6 scfm, preferably 1.0 to 6.0 scfm. Particular preference is given to all 3 criteria in respect of rebound resilience, foam density and/or porosity, as indicated above, being satisfied. In particular, the flexible polyurethane foam used according to the invention has a compressive strength CLD, 40% in accordance with DIN EN ISO 3386-1:2015-10, of 0.1 to 8.0 kPa.

Hot-cured flexible polyurethane foam, cold-cured flexible polyurethane foam and viscoelastic flexible polyurethane foam and the production thereof are known per se. For the purposes of the present invention, a preferred hot-cured flexible polyurethane foam has, in particular, a compressive strength CLD, 40% in accordance with DIN EN ISO 3386-1:2015-10, of 0.5 - 8.0 kPa and/or a rebound resilience of 15-60%, measured in accordance with DIN EN ISO 8307:2008-03, and/or a foam density of 8 to 80 kg/m³ and/or a porosity of 0.5 to 6 scfm, preferably 1.0 to 6.0 scfm. A possible production method is described, for example, in EP 2 481 770 A2 or EP 2 182 020 A1. For the purposes of the present invention, a preferred cold-cured flexible polyurethane foam has, in particular, a compressive strength CLD, 40% in accordance with DIN EN ISO 3386-1:2015-10, of 2.0 - 5.0 kPa, in particular 2.5 - 4.5 kPa, and/or a rebound resilience of ≥ 55%, measured in accordance with DIN EN ISO 8307:2008-03, and/or a foam density of 25 to 80 kg/m³ and/or a porosity (after crushing the foam) of 0.5 to 6 scfm, preferably 1.0 to 6.0 scfm. A possible method of production is described, for example, in EP 1777252 B1. For the purposes of the present invention, a preferred viscoelastic flexible polyurethane foam has, in particular, a glass transition temperature between - 20°C and +15°C and/or a compressive strength CLD, 40% in accordance with DIN EN ISO 3386-1:2015-10, of 0.1 - 5.0 kPa, in particular 0.5 - 3.0 kPa, and/or a rebound resilience of < 10%, measured in accordance with DIN EN ISO 8307:2008-03, and/or a foam density of 30 to 130 kg/m³ and/or a porosity (after crushing the foam) of 0.5 to 6 scfm, preferably 1.0 to 6.0 scfm. A possible method of production is described, for example, in WO 2013/131710 A2. The glass transition temperature can be measured by means of dynamic mechanical analysis (DMA) (DIN 53513:1990-03) or by means of differential calorimetry (DSC) (ISO 11357-2:2013). Strictly speaking, it is a glass transition range which extends over a temperature range. The reported glass transition temperatures are average values.

The shaped flexible PU foam article according to the invention, especially the mattress according to the invention, in a preferred embodiment of the invention, has a height of at least 1 cm to not more than 50 cm and a width of from at least 20 cm to not more than 300 cm, and a length of at least 20 cm to not more than 300 cm. Preferred dimensions are, for example, heights in the range from 5 cm to 40 cm, widths in the range from 70 cm to 200 cm, lengths in the range from 150 cm to 220 cm. The shaped PU foam article according to the invention, especially the cushion according to the invention, in a preferred embodiment of the invention, may also have a height of at least 1 cm to not more than 40 cm and a width of at least 15 cm to not more than 200 cm and a length of at least 15 cm to not more than 200 cm, examples of preferred dimensions being heights in the range from 2 cm to 30 cm, widths in the range from 15 cm to 50 cm, lengths in the range from 15 cm to 50 cm.

In a further preferred embodiment of the invention, the shaped flexible PU foam article takes the form of a mattress and preferably the form of a multizone mattress. The different zones differ in terms of, in particular, the respective hardness. Such multizone mattresses and the production thereof are known per se. They are widely sold commercially. In particular, the mattress has up to seven zones of differing hardness which extend over the longitudinal direction of the mattress and are given the appropriate width. When the mattress has various hardness zones distributed over its area, which are formed, in particular, by cuts and/or hollow spaces in the mattress, this constitutes a further preferred embodiment of the invention.

In a further preferred embodiment of the invention, the shaped flexible PU foam article may also be a cold-cure PU foam mattress, a viscoelastic flexible PU foam mattress, a hot-cure flexible PU foam mattress, a PU gel foam mattress, a latex mattress or a box spring mattress, each containing at least a portion made of a flexible PU foam according to the invention. These types of mattress are known per se to those skilled in the art and are also marketed worldwide under these names. Mattresses made solely of flexible PU foam are usually referred to on the market simply as foam mattresses. The term mattress as used for the purposes of the present invention also encompasses corresponding mattress coverings and underlays.

In a preferred embodiment of the invention, the shaped flexible PU foam article, preferably the mattress, has the feature that based on its starting volume the shaped flexible PU foam article is compressed by at least 20%, preferably at least 30%, in particular at least 40%, and kept in compressed form by an auxiliary means, in particular packaging means, for at least 20 hours, in particular for at least 48 hours.

Suitable auxiliary means, in particular packaging means, are bags and/or films such as are known from the field of roll-up mattresses for example. The bags and/or films may be sealed by any desired means, such as by a clip, or by an adhesive tape or by welding. The function of the auxiliary means is that of maintaining the compressed shape until the end user of the shaped flexible PU foam article wishes to use said shaped article again in the normal way. After removal of the auxiliary means, in particular the packaging means, the compressed shaped article expands again and in the optimal case recovers its original shape and size. The present invention makes it possible to allow improved dimensional recovery after compression over a period of at least 20 hours, in particular of at least 48 hours.

In a further preferred embodiment, the shaped flexible PU foam article is in a compressed and vacuum-packed state and in particular is a roll-up mattress in a vacuum-packed and compressed state.

The provision of the various flexible PU foams which can be used in the context of the present invention is known per se and it is possible to make use of all proven processes with the proviso that the flexible PU foam is produced in the presence of at least one organic ester.

In a preferred embodiment, the inventive organic esters are in accordance with the following formula (I): 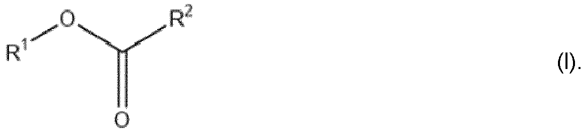 with
- R¹ =: linear, cyclic or branched, saturated or unsaturated, substituted or unsubstituted aliphatic or aromatic hydrocarbon radical, preferably linear, cyclic or branched, saturated or unsaturated, substituted or unsubstituted aliphatic hydrocarbon radical with 1 to 24 carbon atoms or aromatic hydrocarbon radical with at least 5 carbon atoms, more preferably linear, cyclic or branched, saturated or unsaturated, substituted or unsubstituted aliphatic hydrocarbon radical with 2 to 18 carbon atoms
- R² =: linear, cyclic or branched, saturated or unsaturated, substituted or unsubstituted aliphatic or aromatic hydrocarbon radical, preferably linear, cyclic or branched, saturated or unsaturated, substituted or unsubstituted aliphatic hydrocarbon radical with 5 to 23 carbon atoms or aromatic hydrocarbon radical with at least 5 carbon atoms, more preferably linear, cyclic or branched, saturated or unsaturated, substituted or unsubstituted aliphatic hydrocarbon radical with 7 to 17 carbon atoms wherein substituted means that one or more hydrogen atoms are substituted by one of the substituents known in the state of the art, especially hydroxyl groups, ether groups (-O-R³), carbonyl groups (-C(=O)R³), ester groups (-C(=O)O-R³ or -OC(=O)-R³) , halogen atoms (-X), amine groups (-NH₂, -NHR³, -NR³₂) or amide groups (-C(=O)NH₂, -C(=O)NHR³, -C(=O)N(R³)₂, -NHC(=O)-R³, -NR³C(=O)-R³), preferably carbonyl groups (-C(=O)R³), ester groups (-C(=O)O-R³ or -OC(=O)-R³) , halogen atoms (-X), amine groups (-NH₂, -NHR³, -NR³₂) or amide groups (-C(=O)NH₂, -C(=O)NHR³, -C(=O)N(R³)₂, -NHC(=O)-R³, -NR³C(=O)-R³), more preferably ester groups (-C(=O)O-R³ or -OC(=O)-R³) , halogen atoms (-X), amine groups (-NH₂, -NHR³, -NR³₂) or amide groups (-C(=O)NH₂, -C(=O)NHR³, -C(=O)N(R³)₂, -NHC(=O)-R³, -NR³C(=O)-R³) with
- R³ =: identical or different, linear, cyclic or branched, saturated or unsaturated, unsubstituted or substituted aliphatic hydrocarbon radicals, preferably with 1 to 24 carbon atoms, more preferably with 5 to 18 carbon atoms.

Preferred are monocarboxylic esters, propylene glycol-based esters and/or glycerine-based esters.

In an even more preferred embodiment, the organic esters are selected from the group consisting of octanoyl/decanoyl triglyceride, octanoyl triglyceride, ethylhexyl triglyceride, decanoyl triglyceride, glyceryl oleates, glyceryl isostearates, ethylhexyl stearate, ethylhexyl palmitate, ethylhexyl hydroxystearate, isostearyl isostearate, isostearyl palmitate, isostearyl neopentanoate, tridecyl stearate, cetearyl octanoate, coco-caprylate, coco-laprylate/caprate, C₁₂-C₁₅-alkyl benzoate, C₁₂-C₁₅-alkyl ethylhexanoate, propylene glycol dioleate, propylene glycol dicaprylate, propylene glycol dicaprylate/dicaprate, propylene glycol distearate, propylene glycol dipalmitate, propylene glycol dimyristate, propylene glycol dilaurate, propylene glycol dicocoate, propylene glycol diisostearate, pentaerythrityl tetraoctanoate, pentaerythrityl tetraethylhexanoate, pentaerythrityl tetrastearate, pentaerythrityl tetraisostearate, isopropyl myristate, isopropyl isostearate, isocetyl stearate, isopropyl palmitate, decyl cocoate, ethylhexyl cocoate, decyl oleate, cetyl octanoate, diisopentyl terephthalate, isononyl nonanoate, myristyl myristate, cetyl ricinoleate, cetearyl isononanoate, cetearyl ethylhexanoate, cetyl ethylhexanoate, cetyl palmitate, oleyl erucate, stearyl heptanoate, isocetyl palmitate, diisostearyl malate, hexyl laurate, octyldodecyl myristate, isotridecyl isononanoate, isodecyl neopentanoate, myristyl lactate, cetyl lactate, dridecyl trimellitate, octyldodecyl neopentanoate, ethylhexyl salicylate, trimethylolpropane triisostearate, trimethylolpropane tricaprylate/tricaprate, diisopropyl dimer dilinoleate, benzyl salicylate, benzyl benzoate, trioctyldodecyl citrate, triisostearyl citrate, and mixtures thereof.
preferably selected from the group consisting of octanoyl/decanoyl triglyceride, octanoyl triglyceride, ethylhexyl triglyceride, decanoyl triglyceride, glyceryl oleates, glyceryl isostearates, ethylhexyl stearate, ethylhexyl palmitate, isostearyl isostearate, isostearyl palmitate, isostearyl neopentanoate, tridecyl stearate, cetearyl octanoate, coco-caprylate, coco-laprylate/caprate, C₁₂-C₁₅-alkyl benzoate, C₁₂-C₁₅-alkyl ethylhexanoate, propylene glycol dioleate, propylene glycol dicaprylate, propylene glycol dicaprylate/dicaprate, propylene glycol distearate, propylene glycol dipalmitate, propylene glycol dimyristate, propylene glycol dilaurate, propylene glycol dicocoate, propylene glycol diisostearate, pentaerythrityl tetraoctanoate, pentaerythrityl tetraethylhexanoate, pentaerythrityl tetrastearate, pentaerythrityl tetraisostearate, isopropyl myristate, isopropyl isostearate, isocetyl stearate, isopropyl palmitate, decyl cocoate, ethylhexyl cocoate, decyl oleate, cetyl octanoate, diisopentyl terephthalate, isononyl nonanoate, myristyl myristate, cetearyl isononanoate, cetearyl ethylhexanoate, cetyl ethylhexanoate, cetyl palmitate, oleyl erucate, stearyl heptanoate, isocetyl palmitate, diisostearyl malate, hexyl laurate, octyldodecyl myristate, isotridecyl isononanoate, isodecyl neopentanoate, dridecyl trimellitate, octyldodecyl neopentanoate, trimethylolpropane triisostearate, trimethylolpropane tricaprylate/tricaprate, diisopropyl dimer dilinoleate, benzyl benzoate, trioctyldodecyl citrate, triisostearyl citrate, and mixtures thereof.

In a further preferred embodiment, the inventive shaped flexible PU foam article has been obtained with additional use of recycled polyols.

The production of corresponding flexible PU foams in principle requires no further explanation, but some preferred details of the production of the PU foam used for the purposes of the invention are given below. The subject matter of the invention will be described by way of example below, without any intention that the invention be restricted to these illustrative embodiments. Where ranges, general formulae or classes of compounds are specified below, these are intended to encompass not only the corresponding ranges or groups of compounds which are explicitly mentioned but also all subranges and subgroups of compounds which can be obtained by removing individual values (ranges) or compounds. Where documents are cited in the context of the present description, the entire content thereof, particularly with regard to the subject matter that forms the context in which the document has been cited, is intended to form part of the disclosure content of the present invention. Unless stated otherwise, percentages are figures in per cent by weight. When average values are reported below, the values in question are weight averages, unless stated otherwise. Where parameters which have been determined by measurement are reported below, the measurements have been carried out at a temperature of 23°C and a pressure of 100 kPa, unless stated otherwise. Unless stated otherwise, compression of the foam in the context of the present invention means that the foam is preferably compressed by at least 20%, based on its starting volume, in particular over a period of at least 20 hours, more preferred of at least 48 hours.

The compounds, components and additives which follow are mentioned merely by way of example and can be replaced and/or supplemented by other substances known to those skilled in the art.

The isocyanate components used are preferably one or more organic polyisocyanates having two or more isocyanate functions. Polyol components used are preferably one or more polyols having two or more isocyanate-reactive groups.

Isocyanates suitable as isocyanate components for the purposes of this invention are all isocyanates containing at least two isocyanate groups. Generally, it is possible to use all aliphatic, cycloaliphatic, arylaliphatic and preferably aromatic polyfunctional isocyanates known per se. Preferably, isocyanates are used within a range from 60 to 350 mol%, more preferably within a range from 60 to 140 mol%, relative to the sum total of the isocyanate-consuming components.

Specific examples are alkylene diisocyanates having 4 to 12 carbon atoms in the alkylene radical, e.g. dodecane 1,12-diisocyanate, 2-ethyltetramethylene 1,4-diisocyanate, 2-methylpentamethylene 1,5-diisocyanate, tetramethylene 1,4-diisocyanate and preferably hexamethylene 1,6-diisocyanate (HMDI), cycloaliphatic diisocyanates such as cyclohexane 1,3- and 1,4-diisocyanate and also any mixtures of these isomers, 1-isocyanato-3,3,5-trimethyl-5-isocyanatomethylcyclohexane (isophorone diisocyanate or IPDI for short), hexahydrotolylene 2,4- and 2,6-diisocyanate and also the corresponding isomer mixtures, and preferably aromatic diisocyanates and polyisocyanates, for example tolylene 2,4- and 2,6-diisocyanate (TDI) and the corresponding isomer mixtures, mixtures of diphenylmethane 2,4'- and 2,2'-diisocyanates (MDI) and polyphenylpolymethylene polyisocyanates (crude MDI) and mixtures of crude MDI and tolylene diisocyanates (TDI). The organic diisocyanates and polyisocyanates can be used individually or in the form of mixtures thereof. It is also possible to use isocyanates which have been modified by the incorporation of urethane, uretdione, isocyanurate, allophanate and other groups, called modified isocyanates.
Particularly suitable organic polyisocyanates which are therefore used with particular preference are various isomers of tolylene diisocyanate (tolylene 2,4- and 2,6-diisocyanate (TDI), in pure form or as isomer mixtures of various composition), diphenylmethane 4,4'-diisocyanate (MDI), "crude MDI" or "polymeric MDI" (contains the 4,4' isomer and also the 2,4' and 2,2' isomers of MDI and products having more than two rings) and also the two-ring product which is referred to as "pure MDI" and is composed predominantly of 2,4' and 4,4' isomer mixtures, and prepolymers derived therefrom. Examples of particularly suitable isocyanates are detailed, for example, in EP 1712578, EP 1161474, WO 00/58383, US 2007/0072951, EP 1678232 and WO 2005/085310, which are hereby fully incorporated by reference.

Polyols suitable for the purposes of the present invention are all organic substances having two or more isocyanate-reactive groups, preferably OH groups, and also formulations thereof. Preferred polyols include any polyether polyols and/or polyester polyols and/or hydroxyl-containing aliphatic polycarbonates, especially polyether polycarbonate polyols and/or natural oil-based polyols (NOPs) that are typically used for production of polyurethane systems, especially PU foams. The polyols usually have a functionality of from 1.8 to 8 and number-average molecular weights in the range from 500 to 15 000 g/mol. The polyols are typically used with OH numbers in the range from 10 to 1200 mg KOH/g. The number-average molecular weights are typically determined by gel permeation chromatography (GPC), especially using polypropylene glycol as reference substance and tetrahydrofuran (THF) as eluent. The OH numbers can be determined, in particular, in accordance with the DIN standard DIN 53240:1971-12.

Polyether polyols usable with preference are obtainable by known methods, for example by anionic polymerization of alkylene oxides in the presence of alkali metal hydroxides, alkali metal alkoxides or amines as catalysts and by addition of at least one starter molecule, which preferably contains 2 or 3 reactive hydrogen atoms in bonded form, or by cationic polymerization of alkylene oxides in the presence of Lewis acids such as, for example, antimony pentachloride or boron trifluoride etherate, or by double metal cyanide catalysis. Suitable alkylene oxides contain from 2 to 4 carbon atoms in the alkylene radical. Examples are tetrahydrofuran, 1,3-propylene oxide, 1,2-butylene oxide and 2,3-butylene oxide; ethylene oxide and 1,2-propylene oxide are preferably used. The alkylene oxides can be used individually, cumulatively, in blocks, in alternation or as mixtures. Starter molecules used may especially be compounds having at least 2, preferably 2 to 8, hydroxyl groups, or having at least two primary amino groups in the molecule. Starter molecules used may, for example, be water, di-, tri- or tetrahydric alcohols such as ethylene glycol, propane-1,2- and -1,3-diol, diethylene glycol, dipropylene glycol, glycerol, trimethylolpropane, pentaerythritol, castor oil, etc., higher polyfunctional polyols, especially sugar compounds, for example glucose, sorbitol, mannitol and sucrose, polyhydric phenols, resols, for example oligomeric condensation products of phenol and formaldehyde and Mannich condensates of phenols, formaldehyde and dialkanolamines, and also melamine, or amines such as aniline, EDA, TDA, MDA and PMDA, more preferably TDA and PMDA. The choice of the suitable starter molecule depends on the particular field of use of the resulting polyether polyol in the polyurethane production (for example, polyols used for production of flexible PU foams are different from those used in the production of rigid PU foams).

Polyester polyols usable with preference are based on esters of polybasic aliphatic or aromatic carboxylic acids, preferably having 2 to 12 carbon atoms. Examples of aliphatic carboxylic acids are succinic acid, glutaric acid, adipic acid, suberic acid, azelaic acid, sebacic acid, decanedicarboxylic acid, maleic acid and fumaric acid. Examples of aromatic carboxylic acids are phthalic acid, isophthalic acid, terephthalic acid and the isomeric naphthalenedicarboxylic acids. The polyester polyols are obtained by condensation of these polybasic carboxylic acids with polyhydric alcohols, preferably of diols or triols having 2 to 12, more preferably having 2 to 6, carbon atoms, preferably trimethylolpropane and glycerol.

Polyether polycarbonate polyols usable with preference are polyols containing carbon dioxide bound in the form of carbonate. Since carbon dioxide forms as a by-product in large volumes in many processes in the chemical industry, the use of carbon dioxide as comonomer in alkylene oxide polymerizations is of particular interest from a commercial point of view. Partial replacement of alkylene oxides in polyols with carbon dioxide has the potential to distinctly lower the costs for the production of polyols. Moreover, the use of CO₂ as comonomer is very advantageous in environmental terms, since this reaction constitutes the conversion of a greenhouse gas to a polymer. The preparation of polyether polycarbonate polyols by addition of alkylene oxides and carbon dioxide onto H-functional starter substances by use of catalysts is well known. Various catalyst systems can be used here: The first generation was that of heterogeneous zinc or aluminium salts, as described, for example, in US-A 3900424 or US-A 3953383. In addition, mono- and binuclear metal complexes have been used successfully for copolymerization of CO₂ and alkylene oxides (WO 2010/028362, WO 2009/130470, WO 2013/022932 or WO 2011/163133). The most important class of catalyst systems for the copolymerization of carbon dioxide and alkylene oxides is that of double metal cyanide catalysts, also referred to as DMC catalysts (US-A 4500704, WO 2008/058913). Suitable alkylene oxides and H-functional starter substances are those also used for preparing carbonate-free polyether polyols, as described above.

Polyols usable with preference that are based on renewable raw materials, natural oil-based polyols (NOPs), for production of PU foams are of increasing interest with regard to the long-term limits in the availability of fossil resources, namely oil, coal and gas, and against the background of rising crude oil prices, and have already been described many times in such applications (WO 2005/033167; US 2006/0293400, WO 2006/094227, WO 2004/096882, US 2002/0103091, WO 2006/116456 and EP 1678232). A number of these polyols are now available on the market from various manufacturers (WO2004/020497, US2006/0229375, WO2009/058367). Depending on the base raw material (e.g. soya bean oil, palm oil or castor oil) and the subsequent workup, polyols having a different profile of properties are the result. It is possible here to distinguish essentially between two groups: a) polyols based on renewable raw materials which are modified such that they can be used to an extent of 100% for production of polyurethanes (WO2004/020497, US2006/0229375); b) polyols based on renewable raw materials which, because of the processing and properties thereof, can replace the petrochemical-based polyol only in a certain proportion (WO2009/058367).

A further class of polyols usable with preference is that of the so-called filled polyols (polymer polyols). A feature of these is that they contain dispersed solid organic fillers up to a solids content of 40% or more. SAN, PUD and PIPA polyols are among useful polyols. SAN polyols are highly reactive polyols containing a dispersed copolymer based on styrene-acrylonitrile (SAN). PUD polyols are highly reactive polyols containing polyurea, likewise in dispersed form. PIPA polyols are highly reactive polyols containing a dispersed polyurethane, for example formed by in situ reaction of an isocyanate with an alkanolamine in a conventional polyol.
The solids content, which is preferably between 5% and 40%, based on the polyol, depending on the application, is responsible for improved cell opening, and so the polyol can be foamed in a controlled fashion, especially with TDI, and no shrinkage of the foams occurs. The solids content thus acts as an essential processing aid. A further function is to control the hardness via the solids content, since higher solids contents bring about a greater hardness on the part of the foam. The formulations with solids-containing polyols are distinctly less self-stable and therefore tend to require physical stabilization in addition to the chemical stabilization due to the crosslinking reaction. Depending on the solids contents of the polyols, these can be used for example alone or for example in a blend with the abovementioned unfilled polyols.

A further class of polyols usable with preference is of those that are obtained as prepolymers via reaction of polyol with isocyanate in a molar ratio of 100:1 to 5:1, preferably 50:1 to 10:1. Such prepolymers are preferably made up in the form of a solution in polymer, and the polyol preferably corresponds to the polyol used for preparing the prepolymers.

A further class of polyols usable with preference is that of the so-called autocatalytic polyols, especially autocatalytic polyether polyols. Polyols of this kind are based, for example, on polyether blocks, preferably on ethylene oxide and/or propylene oxide blocks, and additionally include catalytically active functional groups, for example nitrogen-containing functional groups, especially amino groups, preferably tertiary amine functions, urea groups and/or heterocycles containing nitrogen atoms. Through the use of such autocatalytic polyols in the production of PU foams, preferably flexible PU foams, it is possible, as the case may be, to reduce the required amount of any catalysts used in addition, depending on application, and/or to match it to specific desired foam properties. Suitable polyols are described, for example, in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) or WO2013102053 (A1) and can be purchased, for example, under the Voractiv^{™} and/or SpecFlex^{™} Activ trade names from Dow. Depending on the required properties of the resulting foams, it is advantageously possible to use appropriate polyols, as described for example in: US 2007/0072951 A1, WO 2007/111828, US 2007/0238800, US 6359022 or WO 96/12759. Further polyols are known to those skilled in the art and can be found, for example, in EP-A-0380993 or US-A-3346557, to which reference is made in full.

Recycled polyols are used in an especially preferred embodiment of the invention.

A preferred ratio of isocyanate and polyol, expressed as the index of the formulation, i.e. as stoichiometric ratio of isocyanate groups to isocyanate-reactive groups (e.g. OH groups, NH groups) multiplied by 100, is in the range from 50 to 140, preferably 70 to 130, more preferably 85 to 125. An index of 100 represents a molar reactive group ratio of 1:1.

Catalysts used in the context of this invention may, for example, be any catalysts for the isocyanate-polyol (urethane formation) and/or isocyanate-water (amine and carbon dioxide formation) and/or isocyanate dimerization (uretdione formation), isocyanate trimerization (isocyanurate formation), isocyanate-isocyanate with CO₂ elimination (carbodiimide formation) and/or isocyanate-amine (urea formation) reactions and/or "secondary" crosslinking reactions such as isocyanate-urethane (allophanate formation) and/or isocyanate-urea (biuret formation) and/or isocyanate-carbodiimide (uretonimine formation).

Suitable catalysts for the purposes of the present invention are, for example, substances which catalyse one of the aforementioned reactions, especially the gelling reaction (isocyanate-polyol), the blowing reaction (isocyanate-water) and/or the dimerization or trimerization of the isocyanate. Such catalysts are preferably nitrogen compounds, especially amines and ammonium salts, and/or metal compounds.

Suitable nitrogen compounds as catalysts, also referred to hereinafter as nitrogen-containing catalysts, for the purposes of the present invention are all nitrogen compounds according to the prior art which catalyse one of the abovementioned isocyanate reactions and/or can be used for production of polyurethanes, especially of polyurethane foams.

Examples of suitable nitrogen-containing compounds as catalysts for the purposes of the present invention are preferably amines, especially tertiary amines or compounds containing one or more tertiary amine groups, including the amines triethylamine, N,N-dimethylcyclohexylamine, N,N-dicyclohexylmethylamine, N,N-dimethylaminoethylamine, N,N,N',N'-tetramethylethylene-1,2-diamine, N,N,N',N'-tetramethylpropylene-1,3-diamine, N,N,N',N'-tetramethyl-1,4-butanediamine, N,N,N',N'-tetramethyl-1,6-hexanediamine, N,N,N',N",N"-pentamethyldiethylenetriamine, N,N,N'-trimethylaminoethylethanolamine, N,N-dimethylaminopropylamine, N,N-diethylaminopropylamine, N,N-dimethylaminopropyl-N',N'-dipropan-2-olamine, 2-[[3-(dimethylamino)propyl]methylamino]-ethanol, 3-(2-dimethylamino)ethoxypropylamine, N,N-bis[3-(dimethylamino)propyl]amine, N,N,N',N",N"-pentamethyldipropylenetriamine, 1-[bis[3-(dimethylamino)propyl]amino]-2-propanol, N,N-bis[3-(dimethylamino)propyl]-N',N'-dimethylpropane-1,3-diamine, triethylenediamine, 1,4-diazabicyclo[2.2.2]octane-2-methanol, N,N'-dimethylpiperazine, 1,2-dimethylimidazole, N-(2-hydroxypropyl)imidazole, 1-isobutyl-2-methylimidazole, N-(3-aminopropyl)imidazole, N-methylimidazole, N-ethylmorpholine, N-methylmorpholine, 2,2,4-trimethyl-2-silamorpholine, N-ethyl-2,2-dimethyl-2-silamorpholine, N-(2-aminoethyl)morpholine, N-(2-hydroxyethyl)morpholine, bis(2-morpholinoethyl) ether, N,N'-dimethylpiperazine, N-(2-hydroxyethyl)piperazine, N-(2-aminoethyl)piperazine, N,N-dimethylbenzylamine, N,N-dimethylaminoethanol, N,N-diethylaminoethanol, 3-dimethylamino-1-propanol, N,N-dimethylaminoethoxyethanol, N,N-diethylaminoethoxyethanol, bis(2-dimethylaminoethyl) ether, N,N,N'-trimethyl-N'-(2-hydroxyethyl)bis(2-aminoethyl) ether, N,N,N'-trimethyl-N-3'-aminopropyl bisaminoethyl ether, tris(dimethylaminopropyl)hexahydro-1,3,5-triazine, 1,8-diazabicyclo[5.4.0]undec-7-ene, 1,5-diazabicyclo-[4.3.0]non-5-ene, 1,5,7-triazabicyclo[4.4.0]dec-5-ene, N-methyl-1,5,7-triazabicyclo[4.4.0]dec-5-ene, 1,4,6-triazabicyclo[3.3.0]oct-4-ene, 1,1,3,3-tetramethylguanidine, tert-butyl-1,1,3,3-tetramethylguanidine, guanidine, 3-dimethylaminopropylurea, 1,3-bis[3-(dimethylamino)propyl]urea, bis-N,N-(dimethylaminoethoxyethyl)isophorone dicarbamate, 3-dimethylamino-N,N-dimethylpropionamide and 2,4,6-tris(dimethylaminomethyl)phenol. Suitable nitrogen-containing catalysts according to the prior art can be purchased, for example, from Evonik under the TEGOAMIN^{®} and DABCO^{®} trade names.

According to the application, it may be preferable that, in the inventive production of polyurethane foams, quaternized and/or protonated nitrogen-containing catalysts, especially quaternized and/or protonated tertiary amines, are used.

For possible quaternization of nitrogen-containing catalysts, it is possible to use any reagents known as quaternizing reagents. Preference is given to using alkylating agents such as dimethyl sulfate, methyl chloride or benzyl chloride, preferably methylating agents such as, in particular, dimethyl sulfate, as quaternizing agents. Quaternization can likewise be carried out using alkylene oxides, such as ethylene oxide, propylene oxide or butylene oxide, preferably with subsequent neutralization using inorganic or organic acids.

Nitrogen-containing catalysts, if quaternized, may be singly or multiply quaternized. Preferably, the nitrogen-containing catalysts are only singly quaternized. In the case of single quaternization, the nitrogen-containing catalysts are preferably quaternized on a tertiary nitrogen atom.

Nitrogen-containing catalysts can be converted to the corresponding protonated compounds by reaction with organic or inorganic acids. These protonated compounds may be preferable, for example, when, for example, a slowed polyurethane reaction is to be achieved or when the reaction mixture is to have enhanced flow behaviour in use.

Organic acids used may, for example, be any organic acids mentioned below, for example carboxylic acids having from 1 to 36 carbon atoms (aromatic or aliphatic, linear or branched), for example formic acid, lactic acid, 2-ethylhexanoic acid, salicylic acid and neodecanoic acid, or else polymeric acids such as polyacrylic or polymethacrylic acids. Inorganic acids used may, for example, be phosphorus-based acids, sulfur-based acids or boron-based acids.

However, the use of nitrogen-containing catalysts which have not been quaternized or protonated is particularly preferred in the context of this invention.

Suitable metal compounds as catalysts, also referred to hereinafter as metallic catalysts, for the purposes of the present invention are all metal compounds according to the prior art which catalyse one of the abovementioned isocyanate reactions and/or can be used for production of polyurethanes, especially of polyurethane foams. They may be selected, for example, from the group of the metal-organic or organometallic compounds, metal-organic or organometallic salts, organic metal salts, inorganic metal salts, and from the group of the charged or uncharged metallic coordination compounds, especially the metal chelate complexes.

The expression "metal-organic or organometallic compounds" in the context of this invention especially encompasses the use of metal compounds having a direct carbon-metal bond, also referred to here as metal organyls (e.g. tin organyls) or organometallic compounds (e.g. organotin compounds). The expression "organometallic or metal-organic salts" in the context of this invention especially encompasses the use of metal-organic or organometallic compounds having salt character, i.e. ionic compounds in which either the anion or cation is organometallic in nature (e.g. organotin oxides, organotin chlorides or organotin carboxylates). The expression "organic metal salts" in the context of this invention especially encompasses the use of metal compounds which do not have any direct carbon-metal bond and are simultaneously metal salts, in which either the anion or the cation is an organic compound (e.g. tin(II) carboxylates). The expression "inorganic metal salts" in the context of this invention especially encompasses the use of metal compounds or of metal salts in which neither the anion nor the cation is an organic compound, e.g. metal chlorides (e.g. tin(II) chloride), pure metal oxides (e.g. tin oxides) or mixed metal oxides, i.e. containing a plurality of metals, and/or metal silicates or aluminosilicates. The expression "coordination compound" in the context of this invention especially encompasses the use of metal compounds formed from one or more central particles and one or more ligands, the central particles being charged or uncharged metals (e.g. metal- or tin-amine complexes). For the purposes of the present invention, the expression "metal-chelate complexes" encompasses especially the use of metal-containing coordination compounds which have ligands having at least two coordination or bonding positions to the metal centre (e.g. metal- or tin-polyamine or metal- or tin-polyether complexes).

Suitable metal compounds, especially as defined above, as possible catalysts in the context of the present invention may be selected, for example, from all metal compounds containing lithium, sodium, potassium, magnesium, calcium, scandium, yttrium, titanium, zirconium, vanadium, niobium, chromium, molybdenum, tungsten, manganese, cobalt, nickel, copper, zinc, mercury, aluminium, gallium, indium, germanium, tin, lead, and/or bismuth, especially sodium, potassium, magnesium, calcium, titanium, zirconium, molybdenum, tungsten, zinc, aluminium, tin and/or bismuth, more preferably tin, bismuth, zinc and/or potassium.

Suitable organometallic salts and organic metal salts, especially as defined above, as catalysts in the context of the present invention are, for example, organotin, tin, zinc, bismuth and potassium salts, in particular corresponding metal carboxylates, alkoxides, thiolates and mercaptoacetates, for example dibutyltin diacetate, dimethyltin dilaurate, dibutyltin dilaurate (DBTDL), dioctyltin dilaurate (DOTDL), dimethyltin dineodecanoate, dibutyltin dineodecanoate, dioctyltin dineodecanoate, dibutyltin dioleate, dibutyltin bis(n-lauryl mercaptide), dimethyltin bis(n-lauryl mercaptide), monomethyltin tris(2-ethylhexyl mercaptoacetate), dimethyltin bis(2-ethylhexyl mercaptoacetate), dibutyltin bis(2-ethylhexyl mercaptoacetate), dioctyltin bis(isooctyl mercaptoacetate), tin(II) acetate, tin(II) 2-ethylhexanoate (tin(II) octoate), tin(II) isononanoate (tin(II) 3,5,5-trimethylhexanoate), tin(II) neodecanoate, tin(II) ricinoleate, tin(II) oleate, zinc(II) acetate, zinc(II) 2-ethylhexanoate (zinc(II) octoate), zinc(II) isononanoate (zinc(II) 3,5,5-trimethylhexanoate), zinc(II) neodecanoate, zinc(II) ricinoleate, bismuth acetate, bismuth 2-ethylhexanoate, bismuth octoate, bismuth isononanoate, bismuth neodecanoate, potassium formate, potassium acetate, potassium 2-ethylhexanoate (potassium octoate), potassium isononanoate, potassium neodecanoate and/or potassium ricinoleate.

In the inventive production of polyurethane foams, it may be preferable to rule out the use of organometallic salts, for example of dibutyltin dilaurate.

Suitable possible metallic catalysts are generally and preferably selected such that they do not have any troublesome intrinsic odour and are essentially toxicologically safe, and such that the resulting polyurethane systems, especially polyurethane foams, have a minimum level of catalyst-related emissions.

In the inventive production of polyurethane foams, it may be preferable, according to the type of application, to use incorporable/reactive or high molecular weight catalysts. Catalysts of this kind may be selected, for example, from the group of the metal compounds, preferably from the group of the tin, zinc, bismuth and/or potassium compounds, especially from the group of the metal carboxylates of the aforementioned metals, for example the tin, zinc, bismuth and/or potassium salts of isononanoic acid, neodecanoic acid, ricinoleic acid and/or oleic acid, and/or from the group of the nitrogen compounds, especially from the group of the low-emission amines and/or the low-emission compounds containing one or more tertiary amine groups, for example described by the amines dimethylaminoethanol, N,N-dimethyl-N',N'-di(2-hydroxypropyl)-1,3-diaminopropane, N,N-dimethylaminopropylamine, N,N,N'-trimethyl-N'-hydroxyethylbis(aminoethyl) ether, N-[2-[2-(dimethylamino)ethoxy]ethyl]-N-methylpropane-1,3-diamine, N,N-bis[3-(dimethylamino)propyl]-propane-1,3-diamine, 1,1'-[(3-{bis[3-(dimethylamino)propyl]-amino}propyl)imino]dipropan-2-ol, bis(N,N-dimethylaminopropyl)amine, 6-dimethylaminoethyl-1-hexanol, N-(2-hydroxypropyl)imidazole, N-(3-aminopropyl)imidazole, aminopropyl-2-methylimidazole, N,N,N'-trimethylaminoethanolamine, 2-(2-(N,N-dimethylaminoethoxy)ethanol, N-(dimethyl-3-aminopropyl)urea derivatives and alkylaminooxamides, such as bis(N-(N',N'-dimethylaminopropyl))oxamide, bis(N-(N',N'-dimethylaminoethyl))oxamide, bis(N-(N',N'-imidazol-idinylpropyl)oxamide, bis(N-(N',N'-diethylaminoethyl))oxamide, bis(N-(N',N'-diethyl-aminopropyl)oxamide, bis(N-(N',N'-diethylaminoethyl)oxamide, bis(N-(N',N'-diethylimino-1-methylpropyl)oxamide, bis(N-(3-morpholinopropylyl)oxamide, and the reaction products thereof with alkylene oxides, preferably having a molar mass in the range between 160 and 500 g/mol, and compounds of the general formula: 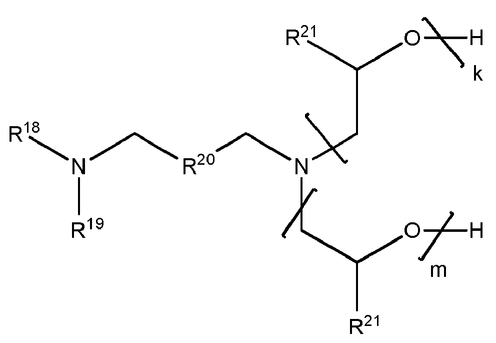 with
_{R}¹⁸, _{R}¹⁹ = -CₐH₂ₐ₊₁ with a = 1-4 for acyclic groups
R¹⁸, R¹⁹ = -C_{b}H_{c}N_{d}- with b = 3-7, c = 6-14, d = 0-2 for cyclic groups
R²⁰ = CₑH_{f}O_{g} with e = 0-4, f = 0-8, g = 0-2
R²¹ = -H, -CH₃, -C₂H₅
k, m = identically or differently 1-5.

Such catalysts and/or mixtures are supplied commercially, for example, under the following names: Jeffcat^{®} ZF-10, Lupragen^{®} DMEA, Lupragen^{®} API, Toyocat^{®} RX 20 and Toyocat^{®} RX 21 , DABCO^{®} RP 202, DABCO^{®} RP 204, DABCO^{®} NE 300, DABCO^{®} NE 310, DABCO^{®} NE 400, DABCO^{®} NE 500, DABCO^{®} NE 600, DABCO^{®} NE 650, DABCO^{®} NE 660, DABCO^{®} NE 740, DABCO^{®} NE 750, DABCO^{®} NE 1060, DABCO^{®} NE 1080, DABCO^{®} NE 1082 and DABCO^{®} NE 2039, Niax^{®} EF 860, Niax^{®} EF 890, Niax^{®} EF 700, Niax^{®} EF 705, Niax^{®} EF 708, Niax^{®} EF 600, Niax^{®} EF 602, KOSMOS^{®} 54, KOSMOS^{®} EF, and TEGOAMIN^{®} ZE 1.

According to the application, it may be preferable that, in the inventive production of polyurethane foams, one or more nitrogen-containing and/or metallic catalysts are used. When more than one catalyst is used, the catalysts may be used in any desired mixtures with one another. It is possible here to use the catalysts individually during the foaming operation, for example in the manner of a preliminary dosage in the mixing head, and/or in the form of a premixed catalyst combination. The expression "premixed catalyst combination", also referred to hereinafter as catalyst combination, for the purposes of this invention especially encompasses ready-made mixtures of metallic catalysts and/or nitrogenous catalysts and/or corresponding protonated and/or quaternized nitrogenous catalysts, and optionally also further ingredients or additives, for example water, organic solvents, acids for blocking the amines, emulsifiers, surfactants, blowing agents, antioxidants, flame retardants, stabilizers and/or siloxanes, preferably polyether siloxanes, which are already present as such prior to the foaming and need not be added as individual components during the foaming operation.

According to the application, it may be preferable when the sum total of all the nitrogen-containing catalysts used relative to the sum total of the metallic catalysts, especially potassium, zinc and/or tin catalysts, results in a molar ratio of 1:0.05 to 0.05:1, preferably 1:0.07 to 0.07:1 and more preferably 1:0.1 to 0.1:1.

In order to prevent any reaction of the components with one another, especially reaction of nitrogen-containing catalysts with metallic catalysts, especially potassium, zinc and/or tin catalysts, it may be preferable to store these components separately from one another and then to feed in the isocyanate and polyol reaction mixture simultaneously or successively.

Suitable use amounts of catalysts are guided by the type of catalyst and are preferably in the range from 0.005 to 10.0 pphp, more preferably in the range from 0.01 to 5.00 pphp (= parts by weight based on 100 parts by weight of polyol) or 0.10 to 10.0 pphp for potassium salts.

Preferred water contents in the process according to the invention depend on whether or not physical blowing agents are used in addition to water, the use of which is optional. In the case of purely water-blown foams, the values typically range from preferably 1 to 20 pphp; when other blowing agents are used in addition, the amount of water used might decrease to e.g. 0 or be the range from e.g. 0.1 to 20 pphp. To achieve high foam densities, preferably neither water nor any other blowing agent is used. To achieve low foam densities, a combination of water and other blowing agent is used.

Suitable, optionally usable physical blowing agents for the purposes of this invention are gases, for example liquefied CO₂, and volatile liquids, for example hydrocarbons of 4 or 5 carbon atoms, preferably cyclo-, iso- and n-pentane, hydrofluorocarbons, preferably HFC 245fa, HFC 134a and HFC 365mfc, but also olefinic hydrofluorocarbons such as HFO 1233zd or HFO1336mzzZ, hydrochlorofluorocarbons, preferably HCFC 141b, oxygen-containing compounds such as methyl formate and dimethoxymethane, or hydrochlorocarbons, preferably dichloromethane and 1,2-dichloroethane. Suitable blowing agents further include ketones (e.g. acetone) or aldehydes (e.g. methylal).

In addition to or in lieu of any water and any physical blowing agents, it is also possible to use other chemical blowing agents that react with isocyanates with gas evolution, examples being formic acid, carbamates or carbonates.

The foam properties of PU foams can be influenced in the course of production thereof especially using siloxanes or organomodified siloxanes, for which it is possible to use the substances cited in the prior art. Preference is given to using compounds that are particularly suitable for the respective flexible PU foam types. Suitable (organomodified) siloxanes are described for example in the following documents: EP 0839852, EP 1544235, DE 102004001408, EP 0839852, WO 2005/118668, US 20070072951, DE 2533074, EP 1537159, EP 533202, US 3933695, EP 0780414, DE 4239054, DE 4229402, EP 867465. These compounds may be prepared as described in the prior art. Suitable examples are described, for instance, in US 4147847, EP 0493836 and US 4855379.

Preference is given to foam stabilizers, those based on polydialkylsiloxane-polyoxyalkylene copolymers, as generally used in the production of urethane foams. The structure of these compounds is preferably such that, for example, a long-chain copolymer of ethylene oxide and propylene oxide is bonded to a polydimethylsiloxane radical. The linkage between the polydialkylsiloxane and the polyether moiety may be via an SiC linkage or an Si-O-C bond. In structural terms, the polyether or the different polyethers may be bonded to the polydialkylsiloxane in terminal or lateral positions. The alkyl radical or the various alkyl radicals can here be aliphatic, cycloaliphatic or aromatic. Methyl groups are very particularly advantageous. The polydialkylsiloxane may be linear or else contain branches. Suitable foam stabilizers are described, for example, in the following documents: EP 0839852, EP 1544235, DE 102004001408, WO 2005/118668, US 2007/0072951, DE 2533074, EP 1537159 EP 533202, US 3933695, EP 0780414, DE 4239054, DE 4229402, EP 867465. The corresponding silicon compounds may be prepared as described in the prior art. Suitable examples are described, for instance, in US 4147847, EP 0493836 and US 4855379. Suitable stabilizers can be purchased from Evonik Industries AG under the TEGOSTAB^{®} trade name.

Suitable siloxanes that may be used especially have the following structure: 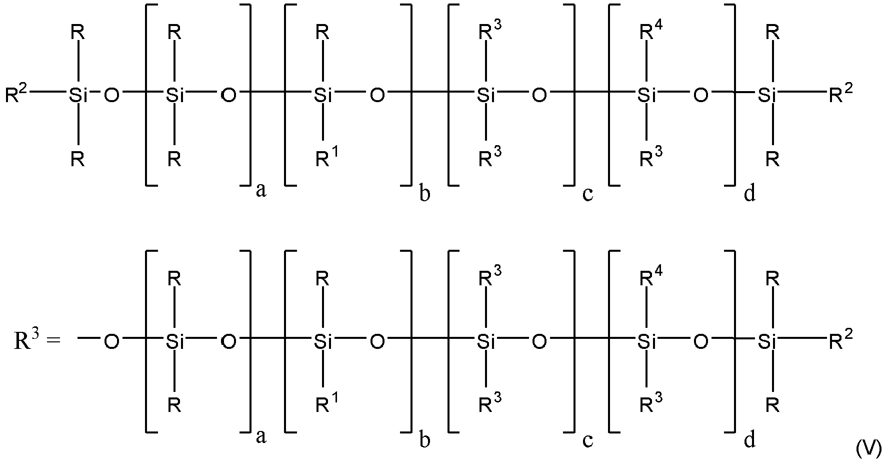 in which
a is independently 0 to 500, preferably 1 to 300 and especially 2 to 150,
b is independently 0 to 60, preferably 1 to 50 and especially 1 to 30,
c is independently 0 to 10, preferably 0 or > 0 to 5,
d is independently 0 to 10, preferably 0 or > 0 to 5,

with the proviso that, for each molecule of the formula (V), the mean number _{Σ}d of T units [SiR³R⁴O] and the mean number _{Σ}c of Q units [SiR³R³O] per molecule is not greater than 50 in either case, the mean number _{Σ}a of D units [SiRRO] per molecule is not greater than 2000 and the mean number _{Σ}b of the siloxy units bearing R¹ per molecule is not greater than 100,
   - R: is independently at least one radical from the group of linear, cyclic or branched, aliphatic or aromatic, saturated or unsaturated hydrocarbon radicals having 1 up to 20 carbon atoms, but is preferably a methyl radical,
   - R²: is independently R¹ or R,
   - R¹: is different from R and is independently an organic radical and/or a polyether radical, R¹ preferably being a radical selected from the group of -CH₂-CH₂-CH₂-O-(CH₂-CH₂O-)ₓ-(CH₂-CH(R')O-)_{y}-R" -CH₂-CH₂-O-(CH₂-CH₂O-)ₓ-(CH₂-CH(R')O-)_{y}-R" -O-(C₂H₄O-)ₓ-(C₃H₅O-)_{y}-R' -CH₂-R^{lV} -CH₂-CH₂-(O)_{x'}-R^{IV} -CH₂-CH₂-CH₂-O-CH₂-CH(OH)-CH₂OH 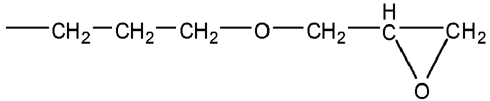 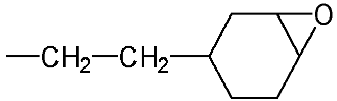
   or
-CH₂-CH₂-CH₂-O-CH₂-C(CH₂OH)₂-CH₂-CH₃ in which
- x: = 0 to 100, preferably > 0, especially 1 to 50,
- x': = 0 or 1,
- y: = 0 to 100, preferably > 0, especially 1 to 50,
- z: = 0 to 100, preferably > 0, especially 1 to 10,
- R': is independently an optionally substituted alkyl or aryl group having 1 to 12 carbon atoms, substituted, for example, by alkyl radicals, aryl radicals or haloalkyl or haloaryl radicals, where different R' substituents may be present within any R¹ radical and/or any molecule of the formula (V), and
- R": is independently a hydrogen radical or an alkyl group having 1 to 4 carbon atoms, a -C(O)-R'" group with R'" = alkyl radical, a -CH₂-O-R' group, an alkylaryl group, for example a benzyl group, the -C(O)NH-R' group,
- R^{IV}: is a linear, cyclic or branched hydrocarbyl radical which also has further substitution, for example substitution by halogens, and has 1 to 50, preferably 9 to 45, more preferably 13 to 37, carbon atoms,
- R⁴: may independently be R, R¹ and/or a functionalized, organic, saturated or unsaturated radical having substitution by heteroatoms, selected from the group of the alkyl, aryl, chloroalkyl, chloroaryl, fluoroalkyl, cyanoalkyl, acryloyloxyaryl, acryloyloxyalkyl, methacryloyloxyalkyl, methacryloyloxypropyl or vinyl radical,
with the proviso that at least one substituent from R¹, R² and R⁴ is not R. The various monomer units in the structural units specified in the formulae (siloxane chains and/or polyoxyalkylene chain) may take the form of alternating blocks with any number of blocks in any sequence or be subject to a random distribution. The indices used in the formulae should be regarded as statistical averages.

The siloxanes of the formula (V) can be prepared by known methods, for example the noble metal-catalysed hydrosilylation reaction of compounds containing a double bond with corresponding hydrosiloxanes, as described, for example, in EP 1520870. The document EP 1520870 is hereby incorporated by reference and is considered to form part of the disclosure-content of the present invention.

Compounds having at least one double bond per molecule used may, for example, be α-olefins, vinyl polyoxyalkylenes and/or allyl polyoxyalkylenes. Preference is given to using vinyl polyoxyalkylenes and/or allyl polyoxyalkylenes. Particularly preferred vinyl polyoxyalkylenes are, for example, vinyl polyoxyalkylenes having a molar mass in the range from 100 g/mol to 8000 g/mol, which may be formed from the monomers propylene oxide, ethylene oxide, butylene oxide and/or styrene oxide in blocks or in random distribution, and which may either be hydroxy-functional or end-capped by a methyl ether function or an acetoxy function. Particularly preferred allyl polyoxyalkylenes are, for example, allyl polyoxyalkylenes having a molar mass in the range from 100 g/mol to 5000 g/mol, which may be formed from the monomers propylene oxide, ethylene oxide, butylene oxide and/or styrene oxide in blocks or in random distribution, and which may either be hydroxy-functional or end-capped by a methyl ether function or an acetoxy function. Particular preference for use as compounds having at least one double bond per molecule is given to the exemplified α-olefins, allyl alcohol, 1-hexenol, vinylpolyoxyalkylenes and/or allylpolyoxyalkylenes and also allyl glycidyl ether and vinylcyclohexene oxide.

In the context of the present invention, preference is given to using siloxanes of the formula (V) in which a is independently 1 to 300, b is independently 1 to 50, c is independently 0 to 4, d is independently 0 to 4, with the proviso that, for each molecule of the formula (V), the mean number Σd of T units and the mean number Σc of Q units per molecule is not greater than 20, the mean number Σa of D units per molecule is not greater than 1500 and the mean number Σb of R¹-bearing siloxy units per molecule is not greater than 50.

In a particularly preferred embodiment of the present invention, siloxanes of the formula (V) are used in which R¹ is independently an organic radical -CH₂-CH₂-CH₂-O-(CH₂-CH₂O-)ₓ-(CH₂-CH(R')O-)_{y}-R" -CH₂-CH₂-O-(CH₂-CH₂O-)ₓ-(CH₂-CH(R')O-)_{y}-R" -CH₂-R^{lV} in which x is 0 to 100, preferably > 0, especially 1 to 50, and y is 0 to 100, preferably > 0, especially 1 to 50, and R' may independently be different from one another and represents methyl, ethyl and/or phenyl radicals. R" is independently a hydrogen radical or an alkyl group of 1 to 4 carbon atoms, a - C(O)-R"' group with R'" = alkyl radical, a -CH₂-O-R' group, an alkylaryl group, for example a benzyl group, the -C(O)NH-R' group, R^{IV} is a linear, cyclic or branched, optionally substituted, for example halogen-substituted, hydrocarbyl radical of 1 to 50, preferably 9 to 45 and more preferably 13 to 37 carbon atoms.

In a further preferred embodiment of the present invention, preferably for production of flexible slabstock foams, siloxanes of the formula (V) are used in which R1 is independently an organic radical selected from the group comprising -CH₂-CH₂-CH₂-O-(CH₂-CH₂O-)ₓ-(CH₂-CH(R')O-)_{y}-R" and/or -CH₂-CH₂-O-(CH₂-CH₂O-)ₓ-(CH₂-CH(R')O-)_{y}-R" and/or -CH₂-R^{IV}, in which x is 0 to 100, preferably > 0, especially 1 to 50, y is 0 to 100, preferably > 0, especially 1 to 50, R' is methyl and R" is independently a hydrogen radical or an alkyl group having 1 to 4 carbon atoms, a C(O)-R'" group with R'" = alkyl radical, a -CH2-O-R' group, an alkylaryl group, for example a benzyl group, the C(O)NH-R' group, where the molar proportion of oxyethylene units based on the total amount of oxyalkylene units accounts for not more than 60% of the oxyalkylene units, i.e. x/(x+y) < 0.6.

In a further preferred embodiment of the present invention, siloxanes of the formula (V) that were hydrosilylated with inclusion of olefins are used, as a result of which R¹ consists to an extent of at least 10 mol%, preferably to an extent of at least 20 mol% and more preferably to an extent of at least 40 mol% of CH₂-R^{lV} where R^{IV} is a linear or branched hydrocarbon having 9 to 17 carbon atoms. A further preferred embodiment of the present invention (especially in the context of the inventive use) uses siloxanes of the formula (V) in which the terminal positions, also called the alpha and omega positions, in the siloxane are at least partly functionalized with R¹ radicals. In this case, at least 10 mol%, preferably at least 30 mol% and more preferably at least 50 mol% of the terminal positions are functionalized with R¹ radicals.

In a particularly preferred embodiment of the invention, siloxanes of the formula (V) in which a statistical average of not more than 50%, preferably not more than 45%, more preferably not more than 40%, of the total mean molar mass of the siloxane is accounted for by the cumulative molar mass of all the identical or different R¹ radicals in the siloxane are used.

In a further preferred embodiment of the present invention, siloxanes of the formula (V) are used in which the R radical is methyl and the structural elements having the index a are present in a greater number than the structural elements having the index b, in such a way that the quotient a/b is at least equal to seven, preferably greater than 10, more preferably greater than 12.

In a further preferred embodiment of the present invention, siloxanes of the formula (V) are used in which the oxyalkylene units present in the R¹ radical are exclusively oxyethylene units and, at the same time, the R" radical is not a hydrogen.

A shaped flexible PU foam article that has been obtained with additional use of recycled polyols corresponds to a preferred embodiment of the invention. The use of recycled polyols normally leads to problems with the recovery of shape after roll compression. In the context of the present invention, it has been found that, surprisingly, the use of at least one organic ester, as elucidated in detail in this description, enables the alleviation of this problem.

Recycled polyols are polyols that are obtained from PU foam waste. This may be production waste from flexible PU foam production or from flexible PU foam waste after use by the consumer (for example old mattresses). In both cases, PU foam is liquefied by chemical processes. Various processes are useful here, for example, glycolysis, hydrolysis or acidolysis. The liquid recycled polyol obtained can then be reused for production of flexible PU foam. However, such flexible PU foams often feature distinctly adverse mechanical properties, such as resistance to roll compression. One source for further information on the use of recycled polyols in flexible PU foams is the following BMBF research report: https://www.cleaner-production.de/fileadmin/assets/bilder/BMBF-Projekte/01RI05070-075_-_Abschlussbericht.pdf.

The additional use of recycled polyols in the context of the invention corresponds to a preferred embodiment of the invention for each item of subject-matter claimed.

Optional additives used may be all substances which are known according to the prior art and find use in the production of polyurethanes, especially of flexible PU foams, for example blowing agents, preferably water for formation of CO₂, and, if necessary, further physical blowing agents, crosslinkers and chain extenders, stabilizers against oxidative degradation (called antioxidants), flame retardants, surfactants, biocides, cell-refining additives, cell openers, solid fillers, antistatic additives, nucleating agents, thickeners, dyes, pigments, colour pastes, fragrances, emulsifiers, buffer substances and/or catalytically active substances, especially as defined above.

Optional crosslinkers and optional chain extenders are low molecular weight, polyfunctional compounds which are reactive toward isocyanates. Suitable compounds are, for example, hydroxyl- or amine-terminated substances such as glycerol, neopentyl glycol, 2-methyl-1,3-propanediol, triethanolamine (TEOA), diethanolamine (DEOA) and trimethylolpropane. The use concentration is usually in the range from 0.1 to 5 parts, based on 100 parts of polyol, but can also deviate therefrom depending on the formulation.

Suitable stabilizers against oxidative degradation, known as antioxidants, preferably include all common free-radical scavengers, peroxide scavengers, UV absorbers, light stabilizers, complexing agents for metal ion impurities (metal deactivators). Preference is given to using compounds of the following classes of substances, or classes of substances containing the following functional groups, with substituents on the respective parent molecules preferably being, in particular, substituents which have groups which are reactive toward isocyanate: 2-(2'-hydroxyphenyl)benzotriazoles, 2-hydroxybenzophenones, benzoic acids and benzoates, phenols, in particular comprising tert-butyl and/or methyl substituents on the aromatic entity, benzofuranones, diarylamines, triazines, 2,2,6,6-tetramethylpiperidines, hydroxylamines, alkyl and aryl phosphites, sulfides, zinc carboxylates, diketones. Phenols may, for example, be esters based on 3-(4-hydroxyphenyl)propionic acid such as triethylene glycol bis[3-(3-tert-butyl-4-hydroxy-5-methylphenyl)propionate], octadecyl 3-(3,5-di-tert-butyl-4-hydroxyphenyl)propionate, or methylenediphenols such as 4,4'-butylidenebis(6-tert-butyl-3-methylphenol). Preferred 2-(2'-hydroxyphenyl)benzotriazoles are, for example, 2-(2'-hydroxy-5'-methylphenyl)benzotriazole or 2-(2'-hydroxy-3',5'-di-tert-butylphenyl)benzotriazole. Preferred 2-hydroxybenzophenones are, for example, 2-hydroxy-4-n-octoxybenzophenone, 2,2',4,4'-tetrahydroxybenzophenone or 2,4-dihydroxybenzophenone. Preferred benzoates are, for example, hexadecyl 3,5-di-tert-butyl-4-hydroxybenzoate or tannins.

Suitable flame retardants in the context of this invention are all substances which are regarded as suitable for this purpose according to the prior art. Preferred flame retardants are, for example, liquid organophosphorus compounds such as halogen-free organophosphates, e.g. triethyl phosphate (TEP), halogenated phosphates, for example tris(1-chloro-2-propyl) phosphate (TCPP) and tris(2-chloroethyl) phosphate (TCEP), and organic phosphonates, for example dimethyl methanephosphonate (DMMP), dimethyl propanephosphonate (DMPP), or solids such as ammonium polyphosphate (APP) and red phosphorus. Suitable flame retardants further include halogenated compounds, for example halogenated polyols, and also solids such as expandable graphite and melamine.

Biocides used may, for example, be commercial products such as chlorophene, benzisothiazolinone, hexahydro-1,3,5-tris(hydroxyethyl-s-triazine), chloromethylisothiazolinone, methylisothiazolinone or 1,6-dihydroxy-2,5-dioxohexane, which are known by the trade names BIT 10, Nipacide BCP, Acticide MBS, Nipacide BK, Nipacide CI, Nipacide FC.

The inventive production of flexible PU foams can be produced by any methods familiar to the person skilled in the art, for example by manual mixing or preferably with the aid of high-pressure or low-pressure foaming machines. The process according to the invention may be performed continuously or batchwise.

A particularly preferred composition for production of the flexible PU foam in the context of the present invention has a density of preferably 5 to 800, especially 5 to 300, more preferably 5 to 150 and especially preferably of 10 to 90 kg/m³, and especially has the following composition:

| Component | Proportion by weight |
|---|---|
| Polyol | 100 |
| catalyst | 0.05 to 5 |
| trimerization catalyst | 0 to 10 |
| Siloxane | 0.01 to 25, preferably 0.1 to 20 |
| Water | 0 to < 25, preferably 0.1 to 15 |
| Blowing agent | 0 to 130 |
| Flame retardant | 0 to 70 |
| Fillers | 0 to 150 |
| Organic esters | 0.1 to 10, preferably 0.5 to 5 |
| Further additives | 0 to 20 |
| Isocyanate index: | greater than 15 |

Another subject of the invention is a process for storing and/or for transporting shaped flexible PU foam articles, preferably mattresses and/or cushions,
where
(a) in a first step a shaped flexible PU foam article is provided by reaction of at least one polyol component and at least one isocyanate component in the presence of at least one blowing agent and of at least one catalyst and further additives, wherein the additives comprise organic esters, preferably as defined in claims 6 or 7.
(b) in optional subsequent steps the shaped flexible PU foam article obtained may optionally be subjected to further processing to prepare it for the application,
(c) and wherein in a final step the shaped flexible PU foam article (optionally prepared for the application) is compressed by at least 20%, preferably 30%, especially 40%, based on its starting volume, and optionally vacuum-packed and kept in compressed form by auxiliary means, in particular packaging means, and sent for storage and/or transport.

In a preferred embodiment, this process is characterized in that a sufficient amount of inventive organic esters, preferably as defined in claims 6 or 7, is added in step (a) so that the proportion by mass thereof in the finished polyurethane foam is from 0.05% to 7% by weight, preferably from 0.3% to 4% by weight, more preferably 0.5% to 3% by weight.

Another subject of the invention is a process for producing flexible polyurethane foam by reaction of at least one polyol component and at least one isocyanate component in the presence of at least one blowing agent and of at least one catalyst and further additives, wherein the additives comprise inventive organic esters, preferably as defined above, more preferably as defined in claims 6 or 7, especially with additional use of recycled polyols.

In a preferred embodiment of the invention, it is a feature of the process that the flexible PU foam is a standard flexible PU foam, a viscoelastic PU foam, an HR PU foam or a hypersoft PU foam, preferably a standard flexible PU foam or a hypersoft PU foam, more preferably a standard flexible PU foam, in particular a hot-cure flexible PU foam.

In a preferred embodiment of the invention, the reaction to produce the inventive flexible PU foams is effected using
- water, and/or
- one or more organic solvents, and/or
- one or more stabilizers against oxidative degradation, especially antioxidants, and/or
- one or more flame retardants, and/or
- one or more foam stabilizers, preferably based on siloxanes and/or polydialkylsiloxane-polyoxyalkylene copolymers,
   and/or
- one or more further auxiliaries, preferably selected from the group of the surfactants, biocides, dyes, pigments, fillers, antistatic additives, crosslinkers, chain extenders, cell openers and/or fragrances.

The invention further provides a flexible polyurethane foam, preferably a standard flexible PU foam, viscoelastic PU foam, HR PU foam or hypersoft PU foam, which is obtainable by a process as described above.

An inventive flexible PU foam wherein the foam has a rebound resilience of 1-80%, measured in accordance with DIN EN ISO 8307:2008-03, and/or a foam density of 5 to 150 kg/m3 and/or a porosity, optionally after crushing the foams, of 0.5 to 6 scfm, preferably 1.0 to 6.0 scfm, corresponds to a preferred embodiment of the invention.

The invention further provides the use of the inventive flexible PU foams as packaging foam, mattress, furniture cushion, automobile seat cushion, headrest, dashboard, automobile interior trim, automobile roof liner, sound absorption material, or for production of corresponding products.

The invention further provides the use of organic esters, preferably as defined above, for improving the dimensional recovery of shaped flexible PU foam articles after compression thereof over a period of at least 20 hours, in particular of at least 48 hours, wherein the shaped flexible PU foam article is obtainable by reaction of at least one polyol component and at least one isocyanate component in the presence of at least one blowing agent and of at least one catalyst and further additives, wherein the additives comprise organic esters, preferably as defined in claims 6 or 7.

The invention further provides the use of flexible polyurethane foam in mattresses and/or cushions, especially mattresses, wherein the flexible PU foam has been obtained by reaction of at least one polyol component and at least one isocyanate component in the presence of one or more catalysts that catalyse the isocyanate-polyol and/or isocyanate-water reactions and/or isocyanate trimerization and further additives,
characterized in that the additives comprise organic esters, preferably as defined above, more preferably as defined in claims 6 or 7.

### Examples

Physical properties of the flexible PU foams:
The flexible PU foams produced were assessed according to the following physical properties a) to g):
a) Rise time: The period of time between the end of mixing of the reaction components and the blow-off of the polyurethane foam.
b) Rise height or foam height: the height of the free-risen foam formed after 3 minutes. Foam height is reported in centimetres (cm).
c) Settling of the foam at the end of the rise phase (= fallback): The settling is found from the difference of the foam height after direct blow-off and 3 minutes after foam blow-off. The foam height is measured at the maximum in the middle of the foam crest by means of a needle secured to a centimetre scale. A negative value here describes settling of the foam after blow-off; a positive value correspondingly describes further rise of the foam.
d) Number of cells per cm (cell count): This is determined visually on a cut surface (measured to DIN EN 15702).
e) Foam density (FD): Determined as described in ASTM D 3574 - 11 under Test A by measuring the core density. Foam density is reported in kg/m³.
f) Porosity determined by the flow method: In the airflow method in accordance with ASTM D 3574 (2011-00), the volume of air that flows through a defined foam specimen in a particular period of time on application of a pressure differential is determined. For this purpose, 12 test specimens having dimensions of 5 cm × 5 cm × 2.5 cm were cut out of each of the finished foams transverse to the direction of rise of the foam, and successively inserted into an analytical instrument constructed for this method. The construction of this instrument is described in ASTM D 3574 (2011-00). The analytical instrument generates an air pressure differential of 125 Pa between the inside of the instrument and the surrounding atmosphere by sucking just enough air in through the test specimen for the differential to be kept constant. The air flow through the test specimen is thus a measure of the porosity of the foam. Values in the range from 0-6.5 scfm (standard cubic feet per min) were measured, with lower values within the interval characterizing a more closed foam and higher values a more open foam.
g) Result of the rolling test: This specific test is described in detail further down.

For the sake of completeness, the measurement principle of DIN EN ISO 16000-9:2008-04 is also elucidated hereinafter.

The materials are characterized here with regard to the type and the amount of the organic substances outgassable therefrom. The analysis method serves to ascertain emissions from materials that are used in furniture and mattresses. This is done by using test chambers to measure the emissions.

Analysis:
Test specimen: sample preparation, sampling and specimen dimensions:
The reaction mixture is introduced into a PE plastic bag which is open at the top. After the foam has risen and blown off, the PE bag is closed 3 min after the blow-off. The foam is stored in this way at room temperature for 12 hours in order to enable complete reaction, but simultaneously in order to prevent premature escape of VOCs. Subsequently, the PE bag is opened and a 7 cm × 7 cm × 7 cm cube is taken from the centre of the foam block and immediately wrapped in aluminium foil and sealed airtight in a PE bag. It was then transported to the analytical laboratory, and the foam cube was introduced into a cleaned 30 I glass test chamber. The conditions in the test chamber were controlled climatic conditions (temperature 21 °C, air humidity 50%). Half the volume of the test chamber is exchanged per hour. After 24 hours, samples are taken from the test chamber air. Tenax adsorption tubes serve to absorb the VOCs. The Tenax tube is then heated, and the volatile substances released are cryofocused in a cold trap of a temperature-programmable evaporator with the aid of an inert gas stream. After the heating phase has ended, the cold trap is rapidly heated to 280°C. The focused substances vaporize in the process. They are subsequently separated in the gas chromatography separation column and detected by mass spectrometry. Calibration with reference substances permits a semi-quantitative estimate of the emission, expressed in "µg/m³".
The quantitative reference substance used for the VOC analysis (VOC value) is toluene. Signal peaks can be assigned to substances using their mass spectra and retention indices. The following equipment is used for the analysis: Gerstel, D-45473 Mühlheim an der Ruhr, Eberhard-Gerstel-Platz 1, Germany, TDS-3 / KAS-4, Tenax^{®} desorption tubes, Agilent Technologies 7890A (GC) / 5975C (MS), column: HP Ultra2 (50 m, 0.32 mm, 0.52 µm), carrier gas: helium. More specific procedural instructions can be taken from DIN EN ISO 16000-9:2008-04.
The analytical principles of VDA 278 are also described hereinbelow for the sake of completeness.

VDA 278 analytical principles:
The materials are characterized with regard to the type and the amount of the organic substances outgassable therefrom. To this end, two semi-quantitative empirical values are determined to estimate the emission of volatile organic compounds (VOC value) and also the proportion of condensable substances (fogging value). Individual substances of the emission are also determined.
In the analysis, the samples are thermally extracted and the emissions are separated by gas chromatography and detected by mass spectrometry. The overall concentrations thus obtained for the VOC fraction are arithmetically converted into toluene equivalents and provide the VOC value as a result; the FOG fraction is represented in hexadecane equivalents and provides the FOG value.
The analytical method serves to determine emissions from non-metallic materials used for moulded parts in motor vehicles; they also include foams.

In thermal desorption analysis (TDS), small amounts of material are heated up in a desorption tube in a defined manner and the volatile substances which are emitted in the course of heating are cryofocused by means of an inert gas stream in a cold trap of a temperature-programmable vaporizer. After the heating phase has ended, the cold trap is rapidly heated to 280°C. The focused substances vaporize in the process. They are subsequently separated in the gas-chromatographic separation column and detected by mass spectrometry. Calibration with reference substances permits a semi-quantitative estimate of the emission, expressed in "µg/g". The quantitative reference substances used are toluene for the VOC analysis (VOC value) and n-hexadecane for the fogging value. Signal peaks can be assigned to substances using their mass spectra and retention indices. Source: VDA 278/10.2011, www.vda.de

Analysis:
Test specimen: sample preparation, sampling and sample dimensions:
After the foams have been demoulded, they are stored at 21 °C and about 50% relative humidity for 24 hours. Samples of the moulding are then taken at suitable and representative sites distributed uniformly across the width of the (cooled) moulding. The foams are then wrapped in aluminium foil and sealed in a polyethylene bag.

The amount of the foam samples introduced into the desorption tubes is 10 - 15 mg in each case.

Test procedure: VOC/FOG thermal desorption:
The sealed samples are sent for direct determination immediately after receipt. The samples are weighed out on an analytical balance to an accuracy of 0.1 mg before starting the analysis and the corresponding amount of foam placed centrally in the desorption tube. A helium stream is passed over the sample and the latter heated to 90°C for 30 minutes. All volatile substances are collected in a cold trap cooled with liquid nitrogen. After 30 minutes the cold trap is heated to 280°C. The vaporizing substances are separated from one another using the described gas chromatography column and then analysed by mass spectroscopy.

GC-MS instrument parameters.

The following instrument was used for the analysis:
from Gerstel
D 45473 Mühlheim an der Ruhr,
Eberhard-Gerstel-Platz 1 TDS-3 / KAS-4
Tenax^{®} desorption tube
Agilent Technologies 7890A (GC)/5975C (MS)
Column: HP Ultra2 (50 m, 0.32 mm, 0.52 µm)
Carrier gas: Helium

Described below is the rolling deformation test which makes it possible to test dimensional recovery after compression in the context of the present invention.

### Rolling deformation test ("rolling test" for short)

### Objective:

The test has for its object to simulate the conditions of rolled mattresses in the laboratory. Since there is no meaningful industry standard for this a novel test was developed which simulates the rolling-up of mattress foams on a small scale.

### Sample preparation:

Test specimens having dimensions of 12 cm (width), 16 cm (length) and 2.5 cm (thickness) are cut out of the flexible PU foam blocks as obtained from manual foaming for example, using a band saw.

A central position in the foam blocks from manual foaming is selected. The test specimen is cut out such that the rise direction of the foam during production is at right angles to the length and width of the test specimen. Test specimens are marked with a felt pen.

### Test procedure:

The test specimen is compressed with a thin metal rod of diameter 5-8 mm (e.g. metal ballpoint pen) at a 12 cm edge. The foam test specimen is then rolled up around this metal rod by hand. This significantly compresses the foam, forming a roll having a diameter of about 3-4 cm. This roll is held manually in this compressed state and pushed completely into a cardboard tube. The cardboard tube has an internal diameter of 4 cm and a length of at least 13 cm. As soon as the rolled-up foam is fully inserted in the tube the metal rod is removed. To minimize friction during removal the metal rod may be lightly greased before the rolling of the foam. The foam then fills the volume of the tube. The compression of the foam in the centre is much more severe than at the edge of the tube. The roll is then stored under controlled, constant conditions (temperature: 21 °C, atmospheric humidity: 60%) for 7 days. After 168 hours the foam is manually removed from the tube and placed on an even surface, and the unrolling of the foam is observed. The expansion of the foam must not be disturbed or influenced.

### Evaluation:

The shaped flexible PU foam article is left to expand for 10 minutes. The test specimens are then evaluated. The most important criterion is whether the foam has completely recovered its original thickness or - especially at the more severely compressed edge - still has compression zones. In some cases a groove from the compression is still also apparent on the surface of the test specimen. Very poor test specimens remain rolled up at one end. A slight bend in the test specimen after expansion is normal and is not considered in the assessment. The following grades were used for the evaluation:
++++ : Test specimen has fully unrolled, no compression lines or compressions apparent whatsoever, expansion occurs rapidly and completely after removal from the tube.
+++ : Test specimen has fully unrolled, no compression lines or compressions apparent whatsoever, expansion occurs rapidly and is already complete after 5 min.
++ : The test specimen has regained a thickness of 2.5 cm at all sites. No indentations and grooves remain visible at the surface after 10 minutes (particularly at the more severely compressed end).
+ : The test specimen has regained a thickness of 2.5 cm at all sites. However, slight indentations and grooves remain visible at the surface (particularly at the more severely compressed end).
0 : The test specimen exhibits a slight compression at the more severely compressed end. The thickness there is more than 2.0 cm but less than 2.5 cm. An indentation is clearly visible at this end.
- : Test specimen exhibits a slight compression at the more severely compressed end. The thickness of the sample there is more than 1 cm but still markedly less than 2.0 cm.
- - : Test specimen exhibits a severe compression at the more severely compressed end. The thickness of the sample there is less than 1 cm. The sample is still partly rolled up at this end.
- - - : Test specimen remains rolled up and compressed at the more severely compressed end.
- - - : Test specimen remains rolled up and compressed almost completely.

The evaluation is preferably undertaken by at least two people. The results are documented. In the context of the present invention the evaluation was undertaken by four people who arrived at consistent results.

Deficiencies and constraints of the test: Correct dimensions of the test specimen and uniform rolling must be ensured in the test. The foam test specimen must have constant cell structure parameters, i.e. in particular a constant cell size and a constant air permeability. The metal rod must not be excessively greased so that no grease penetrates into the sample. Constant storage conditions must be maintained. Test specimens given the various evaluation grades must be kept available for comparison.

### Precision of the test:

Performance of the test with two or more people for evaluation regularly results in consistent assessments. In duplicate measurements too the same result was regularly confirmed. The test has thus proven reliable.

### Hot-cure flexible PU foam - foaming examples

Example 1: Production of hot-cure flexible PU foams (flexible slabstock foam) For the performance testing the hot-cure flexible PU foam formulation specified in Table 1 was used.

**Table 1: Formulation 1 for hot-cure flexible PU foam production.**

| Formulation 1 | Parts by mass (pphp) |
|---|---|
| Polyol 1¹⁾ | 100 parts |
| water | 4.00 parts |
| Tin catalyst²⁾ | 0.20-0.28 part |
| TEGOAMIN^{®} DMEA³⁾ | 0.15 part |
| TEGOSTAB^{®} B 8228⁴⁾ Optionally organic ester additives⁵⁾ | 0.9 part 1.5 part |
| Desmodur^{®} T 80⁶⁾ | 50.0 part |

| | |
|---|---|
| ¹⁾ Polyol 1: Voranol^{®} CP 3322 available from Dow Chemical, this is a glycerol-based polyether polyol having an OH number of 48 mg KOH/g and predominantly secondary OH groups, average molar mass = 3500 g/mol. ²⁾ KOSMOS^{®} 29, available from Evonik Industries: tin(II) salt of 2-ethylhexanoic acid. ³⁾ TEGOAMIN^{®} DMEA: dimethylethanolamine, available from Evonik Industries. Amine catalyst for production of polyurethane foams. ⁴⁾ TEGOSTAB^{®} B 8228, available from Evonik Industries. Foam stabilizer for the production of polyurethane foams. | |

In the inventive experiments, organic esters were added to a hot-cure flexible PU foam formulation. The selected organic ester additives are characterized as follows: 5)

### Organic ester 1

Ethylhexyl stearate

### Organic ester 2

C₁₂-C₁₅ alkyl benzoate

### Organic ester 3

octanoyl/decanoyl triglyceride ⁶⁾ tolyene diisocyanate T 80 (80% 2,4 isomer, 20% 2,6 isomer) from Covestro, 3 mPa·s, 48% NCO, functionality 2.

400 g of polyol was used in each foaming operation; the other formulation constituents were recalculated accordingly. 1.00 part of a component denoted 1.00 g of this substance per 100 g of polyol for example.

The foaming was carried out by what is called manual mixing. Formulation 1 as specified in table 2 was used. To this end, a paper cup was charged with polyol, the respective amine catalyst mixture, the tin catalyst tin(II) 2-ethylhexanoate, water, foam stabilizer and the contents were mixed at 1000 rpm for 60 seconds with a disc stirrer. After the first stirring the isocyanate (TDI) was added to the reaction mixture and stirred at 2500 rpm for 7 s and then immediately transferred into a paper-lined box (30 cm × 30 cm base area and 30 cm height). After being poured in, the foam rose up in the foaming box. In the ideal case, the foam blew off on attainment of the maximum rise height and then fell back slightly. This opened the cell membranes of the foam bubbles and an open-pore cell structure of the foam was obtained. To assess the properties, the following characteristic parameters were determined: rise time, rise height and fallback of the foam after the end of the rise phase (= settling).

Defined foam bodies were cut out of the resulting hot-cure flexible PU foam blocks and were analysed further. The following physical properties were determined on the test specimens: cell count, porosity by the flow method, foam density (FD) and rolling deformation at room temperature.

The results of the influence of the organic esters according to the invention with regard to foaming and the physical properties of the resulting hot-cure flexible PU foams are compiled in the tables that follow.

**Table 2:**

| | Reference (non-inventive) | Reference (non-inventive) | Reference (non-inventive) | Organic ester 1 (inventive) | Organic ester 1 (inventive) | Organic ester 1 (inventive) |
|---|---|---|---|---|---|---|
| Amount of Sn catalyst | 0.20 | 0.24 | 0.28 | 0.20 | 0.24 | 0.28 |
| Additive | - | - | - | 1.5 | 1.5 | 1.5 |
| a) Rise time (s) | 103 | 94 | 89 | 107 | 97 | 89 |
| b) Rise height (cm) | 30.2 | 31.2 | 32.8 | 30.8 | 31.3 | 31.7 |
| c) Settling (cm) | -0.1 | 0.0 | 0.0 | -0.2 | -0.3 | -0.3 |
| d) Cell count (per cm) | 13 | 13 | 13 | 13 | 13 | 13 |
| e) Density (kg/m³) | 24.7 | 24.4 | 24.1 | 24.5 | 24.8 | 24.9 |
| f) Porosity (SCFM) | 3.52 | 1.62 | 0.73 | 5.16 | 2.63 | 1.59 |
| g) Rolling deformat ion (7 d, 21°C) | + | - - - | - - - - | + + + | + + | - - |

**Table 3:**

| | Organic ester 2 (inventive) | Organic ester 2 (inventive) | Organic ester 2 (inventive) | Organic ester 3 (inventive) | Organic ester 3 (inventive) | Organic ester 3 (inventive) |
|---|---|---|---|---|---|---|
| Amount of Sn catalyst | 0.20 | 0.24 | 0.28 | 0.20 | 0.24 | 0.28 |
| Additive | 1.5 | 1.5 | 1.5 | 1.5 | 1.5 | 1.5 |
| a) Rise time (s) | 108 | 98 | 90 | 107 | 95 | 92 |
| b) Rise height (cm) | 30.6 | 31.2 | 31.8 | 32.5 | 33.1 | 33.4 |
| c) Settling (cm) | -0.3 | -0.3 | -0.3 | -0.2 | -0.3 | 0.0 |
| d) Cell count (per cm) | 13 | 13 | 13 | 13 | 13 | 13 |
| e) Density (kg/m³) | 25.2 | 25.1 | 24.7 | 25.1 | 24.4 | 24.2 |
| f) Porosity (SCFM) | 5.29 | 3.01 | 1.00 | 5.18 | 3.07 | 0.38 |
| g) Rolling deformat ion (7 d, 21°C) | + + + | + + | - - | + + + | + + | - - - |

The organic ester additives were investigated in comparison to reference foams without additives. This investigation was carried out under variation of the KOSMOS^{®} T9 use level to be able to determine the effect of the inventive additives on foams of different porosity (scfm). The rolling deformation as determined by the roll test is significantly improved for the inventive foams using the organic esters as additives. The roll test result is improved by at least one and up to five categories in the rating between - - - - and + + + +. The recovery of the original shape of the test specimens after rolling deformation therefor was improved to a quite crucial degree.

The flexible PU foams according to the invention are also found to have low emissions if emissions-optimized additives are used. This can be seen in the VOC tests according to DIN EN ISO 16000-9:2008-04. It is found here, in a low-emissions formulation, that total emissions not increased when organic ester 1 is added (20 µg/m³, cf. Table 4 vs. 21 µg/m³, cf. Table 5), and generally the emissions are well below the typical limits for TVOC of 500 µg/m³. The organic ester additive 1 is thus also highly suitable for use in low-emissions formulations.

**Table 4: VOC test according to DIN EN ISO 16000-9:2008-04: reference hot-cure PU flexible foam**

| Sample name: | **Reference** | | |
|---|---|---|---|
| | | | |
| Instrument: | 7890/5975C | | |
| Sample volume: | 2.000 I | | |
| Mass of standard: | 0.396 µg | | |
| Area of standard: | 129693683 | | |
| | | | |

| Retention time [min] | Area | Concentration | |
|---|---|---|---|
| | | equivalent to toluene | |
| | | | |
| 4,1 | 665070 | 1 µg/m³ | |
| 4,2 | 2919571 | 4 µg/m³ | |
| 6,2 | 675481 | 1 µg/m³ | |
| 9,5 | 797724 | 1 µg/m³ | |
| 21,7 | 3941979 | 6 µg/m³ | Ethylhexanoicacid |
| 28,6 | 2447621 | 4 µg/m³ | |
| 29,0 | 1232087 | 2 µg/m³ | |
| 29,2 | 844226 | 1 µg/m³ | |
| | | | |
| | **Total (TVOC)** | **20 µg/m³** | |

**Table 5: VOC test according to DIN EN ISO 16000-9:2008-04: reference hot-cure PU flexible foam + 1.5 pphp organic ester 1 ( Ethylhexyl stearate )**

| Sample name: | **Reference + 1.5 pphp organic ester 1** | | |
|---|---|---|---|
| | | | |
| Instrument: | 7890/5975C | | |
| Sample volume: | 2.000 I | | |
| Mass of standard: | 0.396 µg | | |
| Area of standard: | 129693683 | | |
| | | | |

| Retention time [min] | Area | Concentration | |
|---|---|---|---|
| | | equivalent to toluene | |
| | | | |
| 4,0 | 563179 | <1 µg/m³ | |
| 4,2 | 2339607 | 4 µg/m³ | |
| 6,2 | 594658 | <1 µg/m³ | |
| 9,5 | 832531 | 1 µg/m³ | |
| 21,7 | 4066921 | 6 µg/m³ | Ethylhexanoicacid |
| 29,0 | 1523691 | 2 µg/m³ | |
| 29,2 | 1181819 | 2 µg/m³ | |
| 29,3 | 868711 | 1 µg/m³ | |
| 30,2 | 1694284 | 3 µg/m³ | |
| 30,7 | 1444495 | 2 µg/m³ | |
| 42,0 | 369347 | <1 µg/m³ | |
| | | | |
| | **Total (TVOC)** | **21 µg/m³** | |

The flexible PU foams according to the invention are also found to have low emissions if emissions-optimized additives are used. This can be seen in the VOC and FOG tests according to VDA 278. It is found here, in a low-emissions formulation, that total emissions found in the FOG value are slightly increased when organic ester additive 3 is added (from < 10 µg/g, cf. Table 6, to 48 µg/g, cf. Table 7), but are nevertheless still well below the typical limits for the VOC (100 µg/g) and FOG (250 µg/g) values. The organic ester additive 3 is thus also highly suitable for use in low-emissions formulations.

**Table 6: VOC test according to VDA 278: reference hot-cure PU flexible foam**

| Sample name: | **Reference** | | |
|---|---|---|---|
| | | | |
| Instrument: | 7890/5975C | | |
| Amount: | 6,7 mg | | |
| Mass Standard: | 0,492 µg | | |
| Area Standard: | 114243323 | | |
| | | | |

| Retention time [min] | Area | Concentration | |
|---|---|---|---|
| | | equivalent to toluene | |
| | | | |
| 21,6 | 4047508 | <1 µg/g | |
| 23,2 | 2746716 | <1 µg/g | |
| 24,5 | 2545816 | <1 µg/g | |
| 25,5 | 2423983 | <1 µg/g | |
| 26,3 | 2525536 | <1 µg/g | |
| 28,7 | 2552234 | <1 µg/g | |
| 30,5 | 4376449 | <1 µg/g | |
| 34,4 | 3035015 | <1 µg/g | |
| | | | |
| | **Total (TVOC)** | **<10 µg/m³** | |

**Table 7: FOG test according to VDA 278: reference hot-cure PU flexible foam + 1.5 pphp organic ester 3 (octanoyl/decanoyl triglyceride)**

| Sample name: | **Reference** | | |
|---|---|---|---|
| | | | |
| Instrument: | 7890/5975C | | |
| Amount: | 6,7 mg | | |
| Mass of standard: | 0,429 µg | | |
| Area of standard: | 132580100 | | |
| | | | |

| Retention time [min] | Area | Concentration | |
|---|---|---|---|
| | | equivalent to hexadecane | |
| | | | |
| 10,8 | 128816292 | 4 µg/g | |
| 10,9 | 19814395 | 3 µg/g | |
| 17,4 | 3860142 | <1 µg/g | |
| 29,7 | 60770214 | 29 µg/g | Glyceroltricaprylate |
| 36,4 | 24793049 | 12 µg/g | |
| | | | |
| | **Total (TVOC)** | **48 µg/m³** | |

The overall advantageousness of the invention has also been confirmed in the case of HR and viscoelastic flexible foams.

## Claims

1. Shaped flexible PU foam article, preferably mattress and/or cushion, wherein the flexible PU foam has been obtained by reaction of at least one polyol component and at least one isocyanate component in the presence of at least one blowing agent and one or more catalysts that catalyse the isocyanate-polyol and/or isocyanate-water reactions and/or isocyanate trimerization and further additives, **characterized in that** the additives comprise organic esters.

2. Shaped flexible PU foam article according to claim 1, **characterized in that** the flexible PU foam is a standard flexible PU foam, a viscoelastic PU foam, an HR PU foam or a hypersoft PU foam, preferably a standard flexible PU foam or a hypersoft PU foam, more preferably a standard flexible PU foam, in particular a hot-cure flexible PU foam.

3. Shaped flexible PU foam article, preferably mattress and/or cushion, according to Claim 1 or 2, **characterized in that** the shaped article has a height of from at least 1 cm to not more than 50 cm and a width of from at least 20 cm to not more than 300 cm, preferably from at least 70 cm to not more than 200 cm, and a length of from at least 20 cm to not more than 300 cm, preferably from at least 150 cm to not more than 220 cm.

4. Shaped flexible PU foam article, preferably mattress and/or cushion, according to any of Claims 1 to 3, **characterized in that** based on its starting volume the shaped PU foam article is compressed by at least 20%, preferably 30%, especially 40%, and kept in compressed form by an auxiliary means, especially packaging means, for at least 20 hours, preferably for at least 48 hours.

5. Shaped flexible PU foam article, preferably mattress and/or cushion, according to any of Claims 1 to 4, **characterized in that** the shaped flexible PU foam article is in a compressed and preferably a vacuum-packed state, and is especially a roll-up mattress.

6. Shaped flexible PU foam article, preferably mattress and/or cushion, according to any of Claims 1 to 5, **characterized in that** the organic esters are in accordance with the following formula (I): 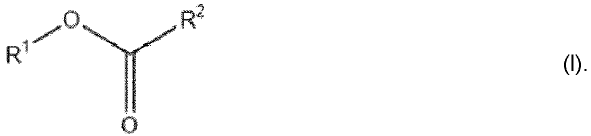 with
R¹ = linear, cyclic or branched, saturated or unsaturated, substituted or unsubstituted aliphatic or aromatic hydrocarbon radical, preferably linear, cyclic or branched, saturated or unsaturated, substituted or unsubstituted aliphatic hydrocarbon radical with 1 to 24 carbon atoms or aromatic hydrocarbon radical with at least 5 carbon atoms, more preferably linear, cyclic or branched, saturated or unsaturated, substituted or unsubstituted aliphatic hydrocarbon radical with 2 to 18 carbon atoms
R² = linear, cyclic or branched, saturated or unsaturated, substituted or unsubstituted aliphatic or aromatic hydrocarbon radical, preferably linear, cyclic or branched, saturated or unsaturated, substituted or unsubstituted aliphatic hydrocarbon radical with 5 to 23 carbon atoms or aromatic hydrocarbon radical with at least 5 carbon atoms, more preferably linear, cyclic or branched, saturated or unsaturated, substituted or unsubstituted aliphatic hydrocarbon radical with 7 to 17 carbon atoms wherein substituted means that one or more hydrogen atoms are substituted by one of the substituents known in the state of the art, especially hydroxyl groups, ether groups (-O-R³), carbonyl groups (-C(=O)R³), ester groups (-C(=O)O-R³ or -OC(=O)-R³), halogen atoms (-X), amine groups (-NH₂, -NHR³, -NR³₂) or amide groups (-C(=O)NH₂,-C(=O)NHR³, -C(=O)N(R³)₂, -NHC(=O)-R³, -NR³C(=O)-R³), preferably carbonyl groups (-C(=O)R³), ester groups (-C(=O)O-R³ or -OC(=O)-R³), halogen atoms (-X), amine groups (-NH₂, -NHR³, -NR³₂) or amide groups (-C(=O)NH₂, -C(=O)NHR³, -C(=O)N(R³)₂, -NHC(=O)-R³, -NR³C(=O)-R³), more preferably ester groups (-C(=O)O-R³ or -OC(=O)-R³) , halogen atoms (-X), amine groups (-NH2, -NHR³, -NR³₂) or amide groups (-C(=O)NH₂, -C(=O)NHR³, -C(=O)N(R³)₂, -NHC(=O)-R³, -NR³C(=O)-R³) with
R³ = identical or different, linear, cyclic or branched, saturated or unsaturated, unsubstituted or substituted aliphatic hydrocarbon radicals, preferably with 1 to 24 carbon atoms, more preferably with 5 to 18 carbon atoms.

7. Shaped flexible PU foam article, preferably mattress and/or cushion, according to any of Claims 1 to 6, **characterized in that** the organic esters are selected from the group consisting of octanoyl/decanoyl triglyceride, octanoyl triglyceride, ethylhexyl triglyceride, decanoyl triglyceride, glyceryl oleates, glyceryl isostearates, ethylhexyl stearate, ethylhexyl palmitate, ethylhexyl hydroxystearate, isostearyl isostearate, isostearyl palmitate, isostearyl neopentanoate, tridecyl stearate, cetearyl octanoate, coco-caprylate, coco-laprylate/caprate, C₁₂-C₁₅-alkyl benzoate, C₁₂-C₁₅-alkyl ethylhexanoate, propylene glycol dioleate, propylene glycol dicaprylate, propylene glycol dicaprylate/dicaprate, propylene glycol distearate, propylene glycol dipalmitate, propylene glycol dimyristate, propylene glycol dilaurate, propylene glycol dicocoate, propylene glycol diisostearate, pentaerythrityl tetraoctanoate, pentaerythrityl tetraethylhexanoate, pentaerythrityl tetrastearate, pentaerythrityl tetraisostearate, isopropyl myristate, isopropyl isostearate, isocetyl stearate, isopropyl palmitate, decyl cocoate, ethylhexyl cocoate, decyl oleate, cetyl octanoate, diisopentyl terephthalate, isononyl nonanoate, myristyl myristate, cetyl ricinoleate, cetearyl isononanoate, cetearyl ethylhexanoate, cetyl ethylhexanoate, cetyl palmitate, oleyl erucate, stearyl heptanoate, isocetyl palmitate, diisostearyl malate, hexyl laurate, octyldodecyl myristate, isotridecyl isononanoate, isodecyl neopentanoate, myristyl lactate, cetyl lactate, dridecyl trimellitate, octyldodecyl neopentanoate, ethylhexyl salicylate, trimethylolpropane triisostearate, trimethylolpropane tricaprylate/tricaprate, diisopropyl dimer dilinoleate, benzyl salicylate, benzyl benzoate, trioctyldodecyl citrate, triisostearyl citrate, and mixtures thereof, preferably selected from the group consisting of octanoyl/decanoyl triglyceride, octanoyl triglyceride, ethylhexyl triglyceride, decanoyl triglyceride, glyceryl oleates, glyceryl isostearates, ethylhexyl stearate, ethylhexyl palmitate, isostearyl isostearate, isostearyl palmitate, isostearyl neopentanoate, tridecyl stearate, cetearyl octanoate, coco-caprylate, coco-laprylate/caprate, C₁₂-C₁₅-alkyl benzoate, C₁₂-C₁₅-alkyl ethylhexanoate, propylene glycol dioleate, propylene glycol dicaprylate, propylene glycol dicaprylate/dicaprate, propylene glycol distearate, propylene glycol dipalmitate, propylene glycol dimyristate, propylene glycol dilaurate, propylene glycol dicocoate, propylene glycol diisostearate, pentaerythrityl tetraoctanoate, pentaerythrityl tetraethylhexanoate, pentaerythrityl tetrastearate, pentaerythrityl tetraisostearate, isopropyl myristate, isopropyl isostearate, isocetyl stearate, isopropyl palmitate, decyl cocoate, ethylhexyl cocoate, decyl oleate, cetyl octanoate, diisopentyl terephthalate, isononyl nonanoate, myristyl myristate, cetearyl isononanoate, cetearyl ethylhexanoate, cetyl ethylhexanoate, cetyl palmitate, oleyl erucate, stearyl heptanoate, isocetyl palmitate, diisostearyl malate, hexyl laurate, octyldodecyl myristate, isotridecyl isononanoate, isodecyl neopentanoate, dridecyl trimellitate, octyldodecyl neopentanoate, trimethylolpropane triisostearate, trimethylolpropane tricaprylate/tricaprate, diisopropyl dimer dilinoleate, benzyl benzoate, trioctyldodecyl citrate, triisostearyl citrate, and mixtures thereof.

8. Shaped flexible PU foam article, preferably mattress and/or cushion, according to any of Claims 1 to 7, **characterized in that** the organic esters are included in a total of 0.05% to 7% by weight, preferably from 0.3% to 4% by weight, more preferably 0.5% to 3% by weight, based on the entire flexible PU foam.

9. Shaped flexible PU foam article according to any of Claims 1 to 8, **characterized in that** it has been obtained with additional use of recycled polyols.

10. Use of organic esters, preferably as defined in claims 6 or 7, for improving the dimensional recovery of shaped flexible PU foam articles after compression thereof over a period of at least 20 hours, preferably of at least 48 hours, wherein the shaped flexible PU foam article is obtainable by reaction of at least one polyol component and at least one isocyanate component in the presence of at least one blowing agent and of at least one catalyst and further additives,
wherein the additives comprise organic esters, preferably as defined in claims 6 or 7.

11. Process for storing and/or for transporting shaped flexible PU foam articles, preferably mattresses and/or cushions,
where
(a) in a first step a shaped flexible PU foam article is provided by reaction of at least one polyol component and at least one isocyanate component in the presence of at least one blowing agent and of at least one catalyst and further additives, wherein the additives comprise organic esters, preferably as defined in claims 6 or 7.
(b) in optional subsequent steps the shaped flexible PU foam article obtained may optionally be subjected to further processing to prepare it for the application,
(c) and wherein in a final step the shaped flexible PU foam article (optionally prepared for the application) is compressed by at least 20%, preferably 30%, especially 40%, based on its starting volume, and optionally vacuum-packed and kept in compressed form by auxiliary means, in particular packaging means, and sent for storage and/or transport.

12. Process according to Claim 11, **characterized in that** a sufficient amount of organic esters, preferably as defined in claims 6 or 7, is added in step (a) so that the proportion by mass thereof in the finished polyurethane foam is from 0.05% to 7% by weight, preferably from 0.3% to 4% by weight, more preferably 0.5% to 3% by weight.

13. Process for producing flexible polyurethane foam by reaction of at least one polyol component and at least one isocyanate component in the presence of at least one blowing agent and of at least one catalyst and further additives,
wherein the additives comprise organic esters, preferably as defined in claims 6 or 7, preferably with additional use of recycled polyols.

14. Use of flexible polyurethane foam in mattresses and/or cushions, especially mattresses, wherein the flexible PU foam has been obtained by reaction of at least one polyol component and at least one isocyanate component in the presence of one or more catalysts that catalyse the isocyanate-polyol and/or isocyanate-water reactions and/or isocyanate trimerization and further additives,
**characterized in that** the additives comprise organic esters, preferably as defined in claims 6 or 7, preferably with additional use of recycled polyols.
